# EUROPÄISCHE PATENTSCHRIFT

(11) **EP 0 797 516 B1**
(45) Veröffentlichungstag und Bekanntmachung des Hinweises auf die Patenterteilung: **22.07.1998**
(21) Anmeldenummer: 95942135.5
(22) Anmeldetag: 13.12.1995
(51) Int. Cl.: B60N 2/22

(54) **GELENKBESCHLAG FÜR FAHRZEUGSITZE**
HINGED MOUNTING FOR VEHICLE SEATS
FERRURE ARTICULEE POUR SIEGES DE VEHICULES

(30) Priorität: 14.12.1994 DE 4444407; 17.05.1995 DE 19518019
(43) Veröffentlichungstag der Anmeldung: 01.10.1997
(73) Patentinhaber: KEIPER RECARO GmbH & Co., D-42855 Remscheid (DE)
(72) Erfinder: NOTTEBAUM, Thorsten, D-42899 Remscheid (DE); SCHÜLER, Rolf, D-42579 Heiligenhaus (DE)
(74) Vertreter: Bartels, Martin Erich Arthur
(86) Internationale Anmeldenummer: EP9504916
(87) Internationale Veröffentlichungsnummer: WO9618519

(56) Entgegenhaltungen:
- EP-A- 0 250 290

## Beschreibung

Die Erfindung betrifft einen Gelenkbeschlag für Fahrzeugsitze, insbesondere Kraftfahrzeugsitze, der die Merkmale des Oberbegriffs des Anspruches 1 aufweist.

Bei bekannten Gelenkbeschlägen dieser Art (EP, A, 0250 290) sind die Rastöffnungen durch die, Lücken eines Zahnkranzes, dessen Zähne von einer Trägerfläche in radialer oder axialer Richtung abstehen, und die Rastelemente durch die Zähne einer Klinke oder eines Zahnkranzes gebildet, dessen Zähne von einem in axialer Richtung relativ zu dem ganzen Zahnkranz verschiebbaren Träger in axialer oder radialer Richtung abstehen. Nachteilig ist bei diesen bekannten Gelenkbeschlägen vor allem, daß sie eine Änderung der Winkelposition des einen Beschlagteils relativ zum anderen Beschlagteil nur in Stufen zulassen.

Der Erfindung liegt daher die Aufgabe zugrunde, einen Gelenkbeschlag der eingangs genannten Art zu schaffen, der auch eine stufenlose Winkeländerung zuläßt. Diese Aufgabe löst ein Gelenkbeschlag mit den Merkmalen des Anspruches 1.

Wenn die Rastelemente nicht wie bei den bekannten Gelenkbeschlägen nur gemeinsam, sondern unabhängig voneinander gegen die Rastöffnungen hin bewegbar sind, kann die Anordnung der Rastelemente bezüglich der Rastöffnungen ohne Schwierigkeiten so getroffen werden, daß in jeder Winkelstellung innerhalb des Schwenkbereiches wenigstens eines der Rastelemente in eine der Rastöffnungen eingreifen kann, wodurch trotz einer formschlüssigen Verriegelung der beiden Beschlagteile im wirksamen Zustand der Rastsperre eine stufenlose Winkeländerung möglich ist.

Bei einer bevorzugten Ausführungsform beruht die Anordnung der Rastelemente bezüglich der Rastöffnungen auf dem Nonius-Prinzip. Der Winkel zwischen zwei in der Schwenkrichtung aufeinanderfolgenden Rastöffnungen unterscheidet sich dabei von dem entsprechenden Winkel zwischen zwei aufeinanderfolgenden Rastelementen. Vorzugsweise ist der Winkel zwischen zwei Rastöffnungen kleiner als der entsprechende Winkel zwischen zwei Rastelementen.

Zweckmäßigerweise verjüngen sich die Rastelemente zu dem gegen die Rastöffnungen weisenden Ende hin. Man kann aber auch Rastöffnungen vorsehen, die gegen die Rastelemente hin eine in der Schwenkrichtung größer werdende Weite haben, oder derartige Rastöffnungen zusammen mit sich verjüngende Rastelemente. Der große Vorteil dieser Maßnahmen besteht darin, daß die Rastelemente auch dann, wenn sie nur unvollständig in die Rastöffnungen eingreifen können, die gewünschte Sperrwirkung erbringen können. Die Mindestzahl der erforderlichen Rastelemente und Rastöffnungen läßt sich mit solchen Rastelementen und/oder Rastöffnungen gering halten.

Die Anordnung der Rastöffnungen und der Rastelemente kann so getroffen werden, daß letztere in axialer Richtung in die Rastöffnungen hineinbewegt und aus diesen herausbewegt werden können. Bei einer bevorzugten Ausführungsform sind jedoch die Rastelemente in radialer Richtung bewegbar. Sie können dann als Riegel ausgebildet sein, wobei zweckmäßigerweise die Riegel ein rechteckförmiges Querschnittsprofil haben, da sich die erforderlichen Führungen für solche Riegel kostengünstig realisieren lassen und auch für eine optimale Ausbildung des in Eingriff mit den Rastöffnungen kommenden freien Endabschnittes ein solcher Querschnitt günstig ist.

Vorteilhafterweise sind die Rastelemente radial innerhalb einer Ringzone angeordnet, in welcher die radial nach innen offenen Rastöffnungen vorgesehen sind. Hierdurch erzielt man eine sehr kompakte Bauweise. Außerdem lassen sich die Rastöffnungen sehr einfach, nämlich durch die Lücken zwischen den Zähnen eines Zahnkranzes, realisieren.

Damit diejenigen Rastelemente, die auf eine der Rastöffnungen ausgerichtet sind, selbsttätig in die Sperrstellung bewegt werden, sobald die Rastelemente von der Betätigungseinrichtung freigegeben werden, ist jedes Rastelement zu den Rastöffnungen hin mit je einem vorgespannten Federelement belastet. Die Federelemente können beispielsweise als Schraubenfedern ausgebildet sein. Aber auch Federelemente, die einstückig mit einer Trägerscheibe ausgebildet sind, von der die zungenartig ausgebildeten Federelemente abstehen, sowie wenigstens eine Schlingfeder kommen beispielsweise in Betracht.

Vorzugsweise ist zwischen denjenigen Flächen der Rastelemente, welche für eine spielfreie Verriegelung des Beschlages bei Gebrauchslast an den Begrenzungsflächen der Rastöffnungen anlegen, und den von den Rastelementen berührten Bereichen dieser Begrenzungsflächen ein außerhalb des Selbsthemmungsbereichs liegender Reibschluß vorgesehen.

Ein außerhalb des Selbsthemmungsbereiches liegender Reibschluß zwischen den Rastelementen und denjenigen Flächen der Rastöffnungen, an denen die Rastelemente anliegen, stellt sicher, daß die Rastelemente dann, wenn der Gelenkbeschlag für einen Einstellvorgang freigegeben werden muß, mit relativ geringem Kraftaufwand in die Entriegelungsstellung bewegt werden können. Andererseits macht ein außerhalb des Selbsthemmungsbereichs liegender Reibschluß zwischen den Rastelementen und den Anlageflächen der Rastöffnungen Maßnahmen erforderlich, welche verhindern, daß die auf den Beschlag wirkende Belastung dazu führen kann, daß die Rastelemente aus den Rastöffnungen herausgedrückt werden. Bei einer bevorzugten Ausführungsform sind deshalb Mittel zur formschlüssigen Sicherung der Rastelemente in deren Sperrlage bei über der Gebrauchslast liegenden Belastungen vorgesehen. Die bei der Gebrauchslast auf die Rastelemente im Sinne des Entriegelns wirkenden Kräfte können nämlich mit der Kraft einer Feder kompensiert werden, welche auf die Rastelemente im Sinne einer Aufrechterhaltung der Verriegelung wirkt.

Wenn alle Rastelemente in radialer Richtung bezüglich der Gelenkachse verschiebbar geführt sind, kommt auch eine Schlingfeder in Betracht, die mit allen Rastelementen in Verbindung steht und im wesentlichen konzentrisch zur Gelenkachse angeordnet ist. Durch ein Verkürzen einer solchen Schlingfeder können alle Rastelemente gemeinsam in die Entriegelungsstellung überführt werden. Ferner können mittels einer solchen Schlingfeder dann, wenn sie vorgespannt ist, alle Rastelemente im Sinne einer Verschiebung in ihre Verriegelungsstellung belastet werden. Schließlich kann die Schlingfeder dann, wenn sie blockiert werden kann, d.h. eine Veränderung ihres Durchmessers verhindert wird, die Rastelemente formschlüssig in deren Sperrlage sichern. Selbstverständlich könnte auch eine erste Schlingfeder zum Schließen und eine zweite Schlingfeder zum Öffnen der Verriegelungseinrichtung vorgesehen werden.

Zusätzlich zu einer oder mehrerer Schlingfedern oder statt einer oder mehrerer Schlingfedern kann man auch eine Sperrscheibe vorsehen, um die Rastelemente formschlüssig in ihrer Sperrlage zu sichern. Beispielsweise kann man eine axial verschiebbare Sperrscheibe mit einer der Anzahl der Rastelemente entsprechenden Anzahl von Segmenten größeren Außendurchmessers vorsehen, zwischen denen je ein Segment kleineren Durchmessers angeordnet ist. In der Entriegelungsstellung sind alle Rastelemente auf die Segmente kleineren Durchmessers ausgerichtet. Im gesperrten Zustand stützen sich die Rastelemente auf den Segmenten größeren Durchmessers ab. Vorteilhaft ist auch eine axial unverschiebbare Sperrscheibe mit axial federnden Zungen, die je einen Durchbruch aufweisen, in den ein Nocken des zugeordneten Rastelementes eingreift, wenn es sich in seiner Verregelungsstelung befindet.

Bei einer anderen Ausführungsform sind die Mittel zur formschlüssigen Sicherung der Rastelemente in deren Sperrlage durch zusammenwirkende Flächen der Rastelemente und der Rastöffnungen gebildet. Es ist dabei besonders vorteilhaft, wenn bei einer Ausbildung der Rastöffnungen als Zahnlücken und der Rastelemente als Zähne mit einem korrespondierend ausgebildeten Endabschnitt außer einem am Zahnende beginnenden Bereich zunehmender Breite ein Bereich von zumindest im wesentlichen konstanter Breite vorgesehen ist, und daß auch die Zahnlücken durch zwei entsprechende Flächenpaare begrenzt sind, so daß bei einem unvollständigen Eingriff eines Zahnes in die zugeordnete Zahnlücke nur der selbsthemmungsfreie Reibschluß und erst bei einem zumindest nahezu vollständigen Eingriff ein selbsthemmender Formschluß erreicht wird. Die den Reibschluß bewirkenden Flächenpaare der Zähne sind zumindest dann erforderlich, wenn in jeder möglichen Winkelstellung des Gelenkbeschlages eine spielfreie Verriegelung vorhanden sein soll.

Bei einer Ausbildung der Rastelemente als radial verschiebbare Zähne ist eine zwangsläufige Verschiebung dieser Zähne in die Entriegelungsstellung mit einfachen Mitteln möglich, nämlich je einem an jedem Zahn vorgesehenen Nocken, der mittels einer quer zur Verschieberichtung des Zahnes verlaufenden und in dieser Richtung bewegbaren Steuerkurve zur Gelenkachse hin verschiebbar ist und dabei den Zahn in die Entriegelungsstellung bewegt.

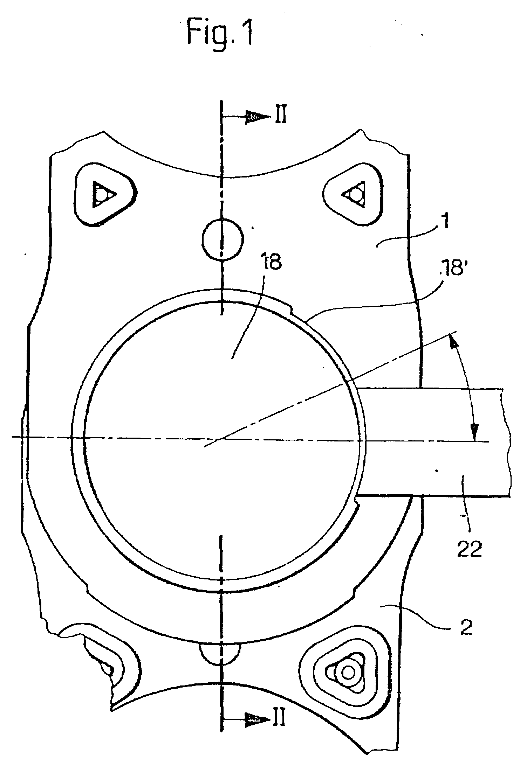

Im folgenden ist die Erfindung anhand von in der Zeichnung dargestellten Ausführungsbeispielen im einzelnen erläutert. Es zeigen
- Fig. 1: eine unvollständig dargestellte Ansicht der Außenseite eines ersten Ausführungsbeispiels,
- Fig. 2: einen Schnitt nach der Linie II-II der Fig. 1,
- Fig. 3: eine perspektivische Explosionsdarstellung des ersten Ausführungsbeispiels,
- Fig. 4: eine vergrößert dargestellte Draufsicht auf die Rastöffnungen und die Rastelemente des ersten Ausführungsbeispiels im verriegelten Zustand des Beschlages,
- Fig. 5: eine Draufsicht entsprechend Fig. 4 im entriegelten Zustand des Beschlages,
- Fig. 6: eine Draufsicht auf die Rastöffnungen eines zweiten Ausführungsbeispiels,
- Fig. 7: eine Draufsicht auf die Rastelemente des zweiten Ausführungsbeispiels,
- Fig. 8: eine Draufsicht auf die Rastöffnungen und die Rastelemente des zweiten Ausführungsbeispiels im verriegelten Zustand des Beschlages.
- Fig. 9a: eine schematisch dargestellte Draufsicht auf ein drittes Ausführungsbeispiel mit einer Schlingfeder,
- Fig. 9b: eine Draufsicht entsprechend Fig. 9a des dritten Ausführungsbeispiels im verriegelten Zustand,
- Fig. 10a: eine schematisch dargestellte Draufsicht auf ein viertes Ausführungsbeispiel im entriegelten Zustand,
- Fig. 10b: eine Draufsicht entsprechend Fig. 10a des vierten Ausführungsbeispiels im verriegelten Zustand,
- Fig. 11: einen vergrößert dargestellten Ausschnitt aus einer Draufsicht auf ein fünftes Ausführungsbeispiel mit einem vollständig in eine der Rastöffnungen eingetretenen Riegel,
- Fig. 12: einen vergrößert dargestellten Ausschnitt entsprechend Fig. 2 des fünften Ausführungsbeispiels mit einem unvollständig in eine der Rastöffnungen eingetretenen Riegel,
- Fig. 13: einen Aussschnitt aus einem vergrößert und schematisch dargestellten sechsten Ausführungsbeispiel.
- Fig. 14: eine unvollständig in vergrößertem Maßstab dargestellte Ansicht von Teilen eines siebten Ausführungsbeispiels,
- Fig. 15: einen unvollständig dargestellten Schnitt des siebten Ausführungsbeispiels nach der Linie XV-XV in Fig. 14,
- Fig. 16: einen Schnitt nach Linie XVI-XVI der Fig. 15.

Ein Gelenkbeschlag zum Verbinden der tragenden Struktur der Rückenlehne eines Kraftfahrzeugsitzes mit der tragenden Struktur von dessen Sitzteil weist einen mit der Struktur der Rückenlehne zu verbindenden oberen Beschlagteil 1 und einen mit der tragenden Struktur des Sitzteils zu verbindenden unteren Beschlagteil 2 auf, die beide aus Stahlblech durch Stanzen hergestellt sind.

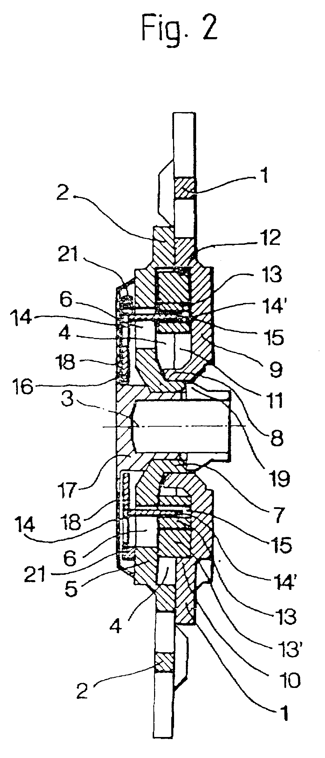

In den unteren Beschlagteil 2 sind auf der dem oberen Beschlagteil 1 zugekehrten Seite radial verlaufende Nuten 4 eingeformt, deren Tiefe etwa gleich der Materialdicke des unteren Beschlagteils 2 ist. Daher sind die die Nuten 4 in axialer Richtung begrenzenden, in Fig. 2 sichtbaren Materialpartien 5 um die Nuttiefe in axialer Richtung vom oberen Beschlagteil 1 weg versetzt. Auf jede der in einer zur Gelenkachse 3 konzentrischen Ringzone liegenden Nuten 4 ist ein ausgestanzter Durchbruch 6 ausgerichtet.

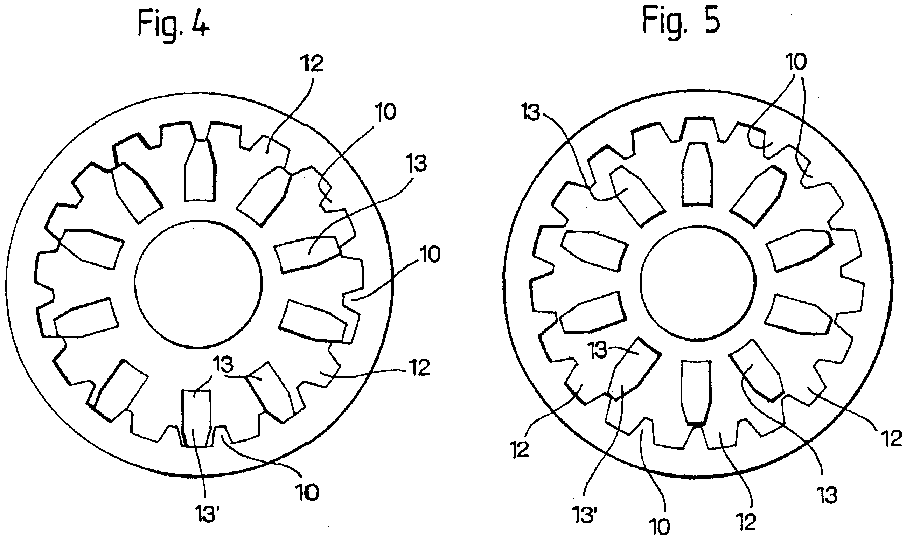

Radial innerhalb der Materialpartie 5 liegt eine die Gelenkachse 3 definierende Nabe 7, welche einstückig mit dem unteren Beschlagteil 2 ausgebildet ist und sich in axialer Richtung über die Ebene zwischen dem oberen Beschlagteil 1 und dem unteren Beschlagteil 2 hinaus erstreckt. Die Außenmantelfläche dieser Nabe 7 bildet die Lagerfläche für eine Nabe 8, welche einstückig mit dem oberen Beschlagteil 1 ausgebildet ist und sich ebenfalls in axialer Richtung über die Ebene zwischen dem oberen Beschlagteil 1 und dem unteren Beschlagteil 2 hinaus erstreckt. Die Nabe 8 ist an einen Ringbereich 9 des oberen Beschlagteils 1 angeformt, der etwa um die Materialstärke des oberen Beschlagteils 1 gegenüber dessen übrigen Bereichen in axialer Richtung vom unteren Beschlagteil 2 weg versetzt ist, mit Ausnahme von Zähnen 10 längs der in radialer Richtung außenliegenden Randzone. Diese Zähne 10 sind, wie insbesondere die Fig. 4 und 5 zeigen, gleichmäßig über einen Winkel von 360° verteilt angeordnet und bilden einen in sich geschlossenen Zahnkranz, dessen radial nach innen vorspringende Zähne in den seitlich durch den Ringbereich 9 und radial innen durch die Nabe 8 begrenzten Ringraum 11 ragen.

Im Ausführungsbeispiel sind neunzehn Zähne 10 vorgesehen, die ein trapezartiges Querschnittsprofil haben. Der Neigungswinkel der beiden Flanken und die Führungsgeometrie sind derart gewählt, daß sich die Reibungsverhältnisse an den Rastelementen im Selbsthemmungsbereich befinden.

Die Lücken zwischen den Zähnen 10 bilden je eine Rastöffnung 12. Es sind also insgesamt neunzehn Rastöffnungen 12 vorhanden, die gleichmäßig über einen Winkel von 360° verteilt sind und ein trapezförmiges Querschnittsprofil mit einer radial nach innen zunehmenden Weite haben. Im folgenden werden die vorstehend bezeichneten Rastelemente mit der Angabe Riegel definiert.

In jeder der zehn Nuten 4 ist radial verschiebbar ein im Querschnitt rechteckfömiger Riegel 13 praktisch spielfrei geführt. Wie Fig. 2 zeigt, ist die in axialer Richtung gemessene Dicke der Riegel 13, die alle gleich ausgebildet sind, an den axialen Abstand der Innenseite des Ringraumes 11 vom Grund der Nuten 4 angepaßt, so daß die Riegel 13 nicht in axialer Richtung aus den Nuten 4 austreten können.

Wie die Fig. 4 und 5 zeigen, hat der in eine der Rastöffnungen 12 einführbare Endabschnitt 13' der Riegel 13 eine trapezartige Querschnittsform. Der Neigungswinkel der Flanken ist im wesentlichen gleich dem Neigungswinkel der Flanken der Rastöffnungen 12 gewählt. Wie Fig. 4 zeigt, sind die Abmessungen des Endabschnittes 13' in Schwenkrichtung kleiner als die entsprechenden Abmessungen der Rastöffnungen 12, so daß zu beiden Seiten des Endabschnittes 13' ein Zwischenraum zwischen seinen Flanken und denjenigen der Rastöffnung 12 vorhanden ist, wenn der Endabschnitt 13' auf die Mitte der Rastöffnung 12 ausgerichtet und in diese vollständig eingeführt ist. Einem mittig auf eine der Rastöffnungen 12 ausgerichteten Riegel 13 steht, wie Fig. 4 zeigt, stets ein Riegel 13 gegenüber, der auf die Mitte eines der Zähne 10 ausgerichtet ist, wenn, wie im Ausführungsbeispiel, eine ungerade Anzahl von Zähnen 10 vorgesehen ist.

Bei der gewählten Anzahl von neunzehn Rastöffnungen 12 und zehn Riegeln 13 ist entsprechend dem Nonius-Prinzip der Winkel, den zwei in der Schwenkrichtung aufeinanderfolgende Riegel 13 definieren, um ein Zehntel kleiner als der Winkel, den einer der Zähne 10 mit dem übernächsten Zahn 10 definiert, wie dies insbesondere Fig. 4 erkennen läßt. Die Abmessungen der Endabschnitte 13' der Riegel 13 in der Schwenkrichtung sind um so viel kleiner gewählt als die entsprechenden Abmessungen der Rastöffnungen 12, daß dann, wenn einer der Riegel 13 auf die Mitte einer der Rastöffnungen 12 ausgerichtet ist, die beiden benachbarten Riegel 13 annähernd bis zum Grund in die Rastöffnungen 12 eindringen können, auf die sie ausgerichtet sind, und dabei mit ihrer einen Flanke an der einen Flanke der Rastöffnung 12 anlegen. Diese beiden Riegel 13 verriegeln den oberen Beschlagteil 1 mit dem unteren Beschlagteil 2 in beiden Schwenkrichtungen formschlüssig und spielfrei. An der Verriegelung sind außerdem die beiden auf diese Riegel 13 folgenden Riegel 13 beteiligt, die aber nur unvollständig in die auf sie ausgerichteten Rastöffnungen 12 eingreifen. Die fünf übrigen Riegel 13 treffen mit ihrer radial nach außen weisenden Kopffläche auf die radial nach innen weisende Kopffläche der Zähne 10.

Infolge der geneigten Flanken der Endabschnitte 13' der Riegel 13 und der Rastöffnungen 12 sind in jeder anderen Winkellage des oberen Beschlagteils 1 relativ zum unteren Beschlagteil 2 wenigstens zwei Riegel 13 in zumindest unvollständigem Eingriff in zwei der Rastöffnungen 12, wobei der eine Riegel eine Schwenkbewegung in der einen Richtung und der andere Riegel eine Schwenkbewegung in der entgegengesetzten Richtung formschlüssig verhindert.

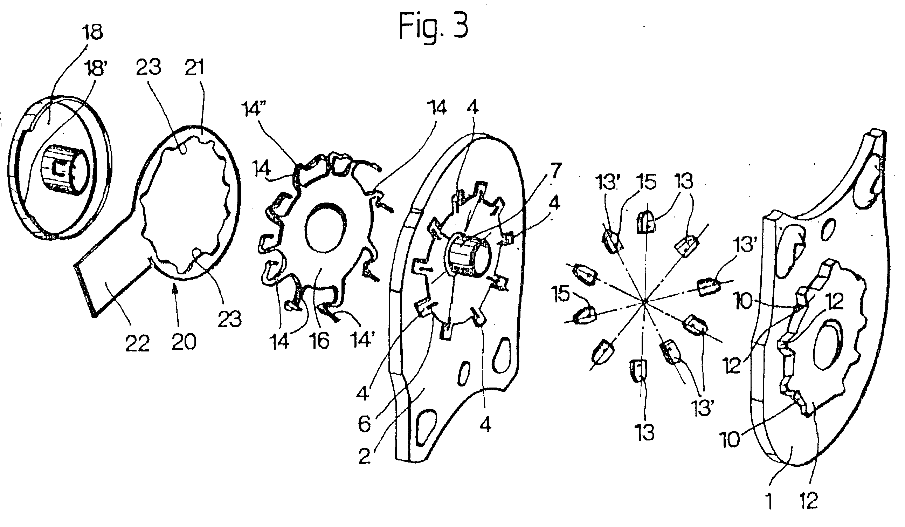

An jedem der unabhängig voneinander in axialer Richtung verschiebbaren Riegel 13 greift ein Federelement 14 an, das durch eine Formfeder gebildet ist, die mit einem Arm 14' durch den zugeordneten Durchbruch 6 hindurch in eine Querbohrung 15 des zugeordneten Riegels 13 eingreift und auf diesen eine radial nach außen gerichtete Kraft auszuüben vermag. Mittels der Feder-elemente 14 können deshalb alle Riegel 13 soweit radial nach außen verschoben werden, als dies die Zähne 10 und Rastöffnungen 12 zulassen. Wie Fig. 3 zeigt, sind alle Federelemente 14 einstückig mit einer Ringscheibe 16 ausgebildet. Von deren äußerem Rand erstreckt sich jedes der gleich ausgebildeten Federelemente 14 zunächst radial nach außen, ist dann in Umfangsrichtung unter Bildung eines radial nach außen weisenden Höckers 14'' abgebogen und erstreckt sich dann ein Stück weit in Umfangsrichtung. An diesen Abschnitt schließt sich rechtwinklig, also mit einer Erstreckung in axialer Richtung, der Arm 14' an. Die gewählte Form des Federelementes 14 ermöglicht dem Arm 14' einen Federweg in radialer Richtung, der mindestens so groß ist wie der Verschiebeweg der Riegel 13 in radialer Richtung.

Die Ringscheibe 16 ist auf einer im Ausführungsbeispiel aus Kunststoff bestehenden Buchse 17 neben der dem oberen Beschlagteil 1 abgewandten Seite des unteren Beschlagteils 2 angeordnet, wie Fig. 2 zeigt. Die Buchse 17, welche die Nabe 7 des unteren Beschlagteils 2 durchdringt und in ihr drehbar gelagert ist, ist einstückig mit einer Abdeckkappe 18 ausgebildet, welche die Ringscheibe 16 vollständig abdeckt und mit ihrem zum unteren Beschlagteil 2 hin abgebogenen Rand am unteren Beschlagteil 2 anliegt. Radial federnde Zungen 19 der Buchse 17 bilden die eine Flanke einer Ringnut der Buchse 17, in welche die Nabe 7 eingreift.

Zur Freigabe des oberen Beschlagteiles 1 für eine Schwenkbewegung ist es notwendig, alle Riegel 13 in die in Fig. 5 dargestellte Entriegelungsstellung zu bringen, in welcher sie sich alle radial innerhalb der Rastöffnungen 12 befinden. Für diese Verschiebebewegung radial nach innen müssen alle Arme 14' der Federelemente 14 entsprechend radial nach innen bewegt werden. Hierfür ist eine als Ganzes mit 20 bezeichnete Betätigungseinrichtung oder Steuereinheit vorgesehen. Die Steuereinheit 20 weist einen Ring 21 auf, von dem radial ein Betätigungshebel 22 absteht, weshalb in dem hochgestellten Rand der Abdeckkappe 18 eine Ausnehmung 18' vorgesehen ist, durch die hindurch der Betätigungshebel 22 sich erstreckt. Der Ring 21 ist in der von der Ringscheibe 16 definierten Ebene angeordnet und übergreift die in der Ebene der Ringscheibe 16 liegenden Teile der Federelemente 14 einschließlich der Höcker 14''. Für jeden dieser Höcker 14'' weist der Ring 21 in seiner Innenmantelfläche eine Nockenfläche 23 auf. Der Verlauf aller gleich ausgebildeten Nockenflächen 23 ist so gewählt, daß ein Schwenkwinkel, der wesentlich kleiner ist als der Winkel zwischen zwei aufeinanderfolgenden Regeln 13 und im Ausführungsbeispiel etwa 15° beträgt, ausreicht, um den Arm 14' aller Federelemente 14 von einer Position, die dem vollständigen Eingriff des zugeordneten Riegels 13 in eine der Rastöffnungen 12 entspricht, in eine Position zu bewegen, in welcher der zugeordnete Riegel 13 außer Eingriff mit den Rastöffnungen 12 ist.

Eine nicht dargestellte, vorgespannte Feder sucht die Steuereinheit 20 in derjenigen Winkelposition zu halten, in welcher die Federelemente 14 die Riegel 13 in der Verriegelungsstellung zu halten vermögen. Nach einer Schwenkbewegung der Steuereinheit 20 in diejenige Winkelstellung, in welcher alle Riegel 13 sich in ihrer Freigabestellung befinden, braucht deshalb für eine erneute Verriegelung des Gelenkbeschlages nur die Steuereinheit 20 wieder freigegeben zu werden. Sie wird dann von der Feder selbsttätig in die Sperrstellung zurückgeschwenkt.

Wenn, wie üblich, durch eine Betätigung der Steuereinheit 20 auch ein auf der anderen Sitzseite vorgesehener, spiegelbildlich gleich ausgebildeter Gelenkbeschlag entriegelt oder verriegelt werden soll, braucht nur das eine Ende eines Rohres oder Stabes in die Buchse 17 und das andere Ende in die entsprechende Buchse des anderen Gelenkbeschlages eingesteckt und drehfest verbunden zu werden. Dank der Ausnehmung 18', welche den Betätigungshebel 22 spielfrei aufnimmt, wird nämlich die Schwenkbewegung in eine entsprechende Drehbewegung der Buchse 17 und damit auch des mit ihr drehfest verbundenen Rohres oder Stabes umgesetzt, wodurch der Ring der Betätigungseinrichtung des anderen Gelenkbeschlages entsprechend gedreht wird.

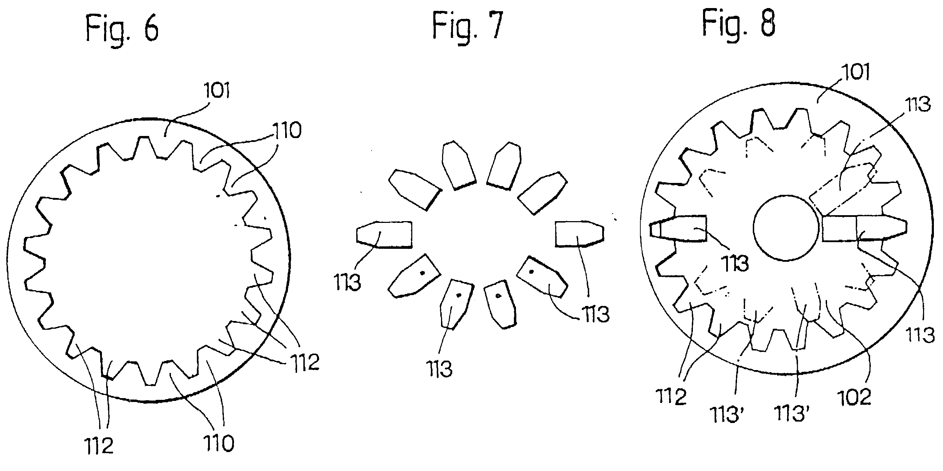

Das zweite Ausführungsbeispiel, von dem in den Fig. 6 bis 8 nur die Zähne 110 und Rastöffnungen 112 des oberen Beschlagteils 101 sowie die Riegel 113 und der sie führende Teil des unteren Beschlagteils 102 dargestellt sind, unterscheidet sich im wesentlichen von dem ersten Ausführungsbeispiel nur dadurch, daß für die Anzahl der Rastöffnungen 112 eine gerade Zahl, nämlich die Zahl achtzehn gewählt ist. Dies hat, wie die Fig. 7 und 8 zeigen, zur Folge, daß dann, wenn einer der Riegel 113 auf die Mitte einer der Rastöffnungen 112 ausgerichtet ist, auch der diametral gegenüberliegende Riegel 113 auf die Mitte einer der Rastöffnungen 112 ausgerichtet ist.

Wie Fig. 8 zeigt, kann die Form des in die Rastöffnungen 112 eingreifenden Endabschnittes 113' der Riegel 113 auch so gewählt sein, daß beide Flanken an denjenigen der Rastöffnung 112 anliegen, wenn der Riegel 113 auf die Mitte der Rastöffnung 112 ausgerichtet ist.

Wegen weiterer Einzelheiten wird auf die Ausführungen zu dem ersten Ausführungsbeispiel Bezug genommen, da insofern Übereinstimmung besteht.

Wie insbesondere Fig. 8 zeigt, haben bei dem zweiten Ausführungsbeispiel die diametral liegenden Riegel die gleiche Position bezüglich der Rastöffnungen 112. Die Riegel 113 bilden also zwei Gruppen, von denen die eine auch fehlen könnte, ohne die Verriegelungsmöglichkeiten einzuschränken. Aber auch bei einer anderen Anzahl von Rastöffnungen und/oder einer anderen Anzahl von Riegeln kann es möglich sein, die erforderliche Anzahl von Riegeln nur über ein Segment verteilt anzuordnen oder die Riegel so über 360° anzuordnen, daß zwischen in der Schwenkrichtung aufeinanderfolgenden Riegeln nicht immer der gleiche Winkel vorgesehen ist, sondern beispielsweise auch ein ganzzahliges Mehrfaches des kleinsten Winkels realisiert ist. Es muß nur gewährleistet sein, daß in jeder Winkelposition des oberen Beschlagteils dieser in beiden Schwenkrichtungen formschlüssig und spielfrei verriegelbar ist.

Sofern der Flankenwinkel der Rastöffnungen und des in sie eingreifenden Endabschnittes der Riegel so groß gewählt ist, daß keine Selbsthemmung mehr vorhanden ist, ist es notwendig, die sich in Eingriff mit den Rastöffnungen befindenden Riegel gegen eine radiale Verschiebung nach innen zu sichern. Hierzu kann man einen oder mehrere Stützkörper radial innerhalb der Riegel anordnen, die durch einen geeigneten Mechanismus in diejenige Position gebracht und dort formschlüssig gehalten werden können, in welcher sie die Riegel abstützen.

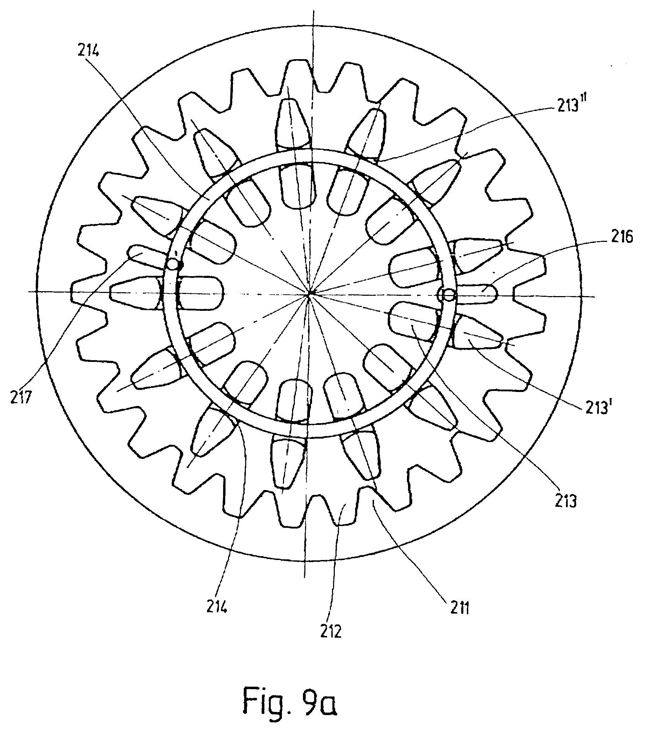

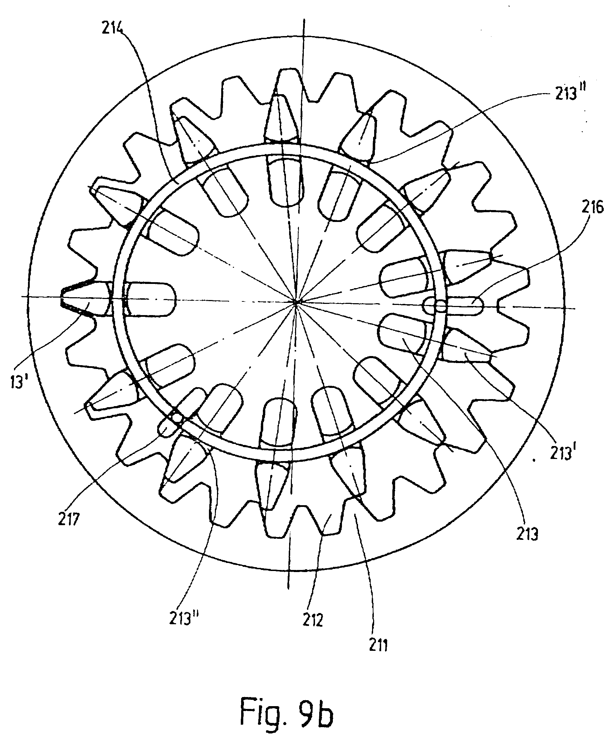

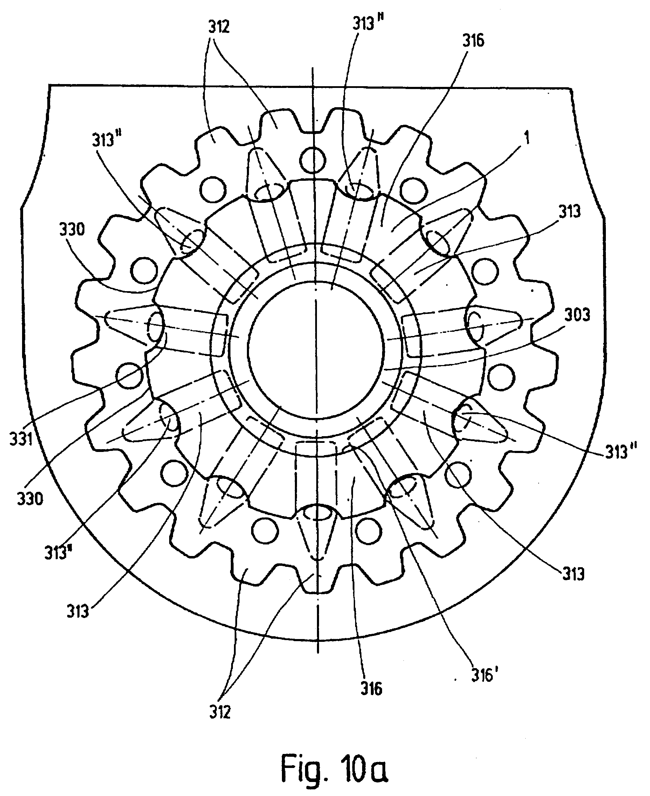

Auch das in den Fig. 9a und9b dargestellte dritte Ausführungsbeispiel des erfindungsgemäßen Gelenkbeschlages für Kraftfahrzeugsitze mit einem mit der Rückenlehne zu verbindenden oberen Beschlagteil und einem mit der Sitzstruktur zu verbindenden unteren Beschlagteil, die durch eine Gelenkachse miteinander schwenkbar verbunden sind, weist am einen Beschlagteil konzentrisch zur Gelenkachse ein innenverzahntes Rad auf, das einstückig mit dem Beschlagteil ausgebildet sein kann. Zwischen je zwei benachbarten Zähnen 211 dieses Zahnrades ist je eine Rastöffnung 212 vorhanden. Die Rastöffnungen 212, die alle gleich ausgebildet sind, haben eine trapezförmige, sich radial nach innen öffnende Querschnittsform. Die beiden die Rastöffnung seitlich begrenzenden Flanken sind gegenüber einer Radialebene um den gleichen Winkel in die eine bzw. andere Richtung geneigt. Dieser Winkel liegt außerhalb des Selbsthemmungsbereiches.

Am anderen Beschlagteil sind gleichmäßig über den Umfang verteilt angeordnete, radial verlaufende Führungen vorgesehen, in denen je ein als Rastelement dienender Riegel 213 praktisch spielfrei geführt ist. Im Ausführungsbeispiel sind dreizehn Riegel 213 und fünfundzwanzig Rastöffnungen 212 vorgesehen. Die Anzahl der Riegel und der Rastöffnungen ist so gewählt, daß in jeder beliebigen Winkelstellung der beiden Beschlagteile wenigstens zwei der Riegel 213 in zwei der Rastöffnungen 212 eingreifen, und zwar derart, daß sie an unterschiedlichen Flanken anlegen und dabei die beiden Gelenkbeschläge in beiden Drehrichtungen spielfrei verriegeln. Der in Eingriff mit den Rastöffnungen 212 kommende Endabschnitt 213' hat deshalb seitliche Flanken, welche um den gleichen Winkel wie die Flanken der Rastöffnungen gegenüber der radialen Richtung geneigt sind.

Vorteilhafterweise wählt man eine Zähnezahl, die gleich einem ganzzahligen Vielfachen der Zahl der Riegel 213 plus oder minus eins beträgt. Die in mehr oder weniger tiefem Eingriff in die Rastöffnungen 212 stehenden Riegel 213 liegen dann in einem einzigen Sektor nebeneinander.

Wie die Fig. 9a und 9b zeigen, weisen alle Riegel 213 auf ihrer in einer Radialebene freiliegenden Seite je eine quer zur Verschieberichtung verlaufende, in den Fig. 9a und 9b nur schematisch dargestellte Nut 213'' auf. In diesen Nuten 213'' liegt eine Schlingfeder 214. Damit diese Schlingfeder 214 nicht in Anlage an eine Kante kommen kann, sind die Nuten 213'' vorzugsweise durch konvex gekrümmt Flanken begrenzt, wie die Fig. 9a und 9b zeigen. Da alle Riegel 213 gleich ausgebildet sind, ist die Schlingfeder 214 in der Entriegelungsstellung konzentrisch zum Gelenkzapfen angeordnet. Die Enden der Schlingfeder 214 müssen sich überlappen. Deshalb weist sie mehr als eine Windung auf, im Ausführungsbeispiel etwa eindreiviertel Windungen, und ihre beiden Enden sind um 90° abgebogen. Das eine dieser Enden greift in ein radial verlaufendes Langloch 216 des Beschlagunterteils ein, das andere in ein radiales Langloch 217 eines Betätigungsgliedes, beispielsweise eines Schwenkhebels, mittels dessen die Schlingfeder 214 zusammengezogen oder für eine Aufweitung aufgrund ihrer Vorspanng freigegeben werden kann. Alternativ ist es auch möglich, mehrere Schlingfedern mit einer Windungszahl kleiner eins einzusetzen, die sich gegenseitig überlappen. Dies führt zu einem kleineren Betätigungswinkel beim Lösen der Verriegelung. Bei einer Bewegung des mit dem Betätigungsglied verbundenen Endes der Schlingfeder 214 im Sinne einer Verminderung des Durchmessers der Schlingfeder 214 werden alle Riegel 213 praktisch gleichzeitig in die Entriegelungsstellung bewegt. Die Schlingfeder 214 ist derart vorgespannt, daß sie ihren Durchmesser zu vergrößern sucht. Sie übt deshalb auf alle Riegel 213 dann, wenn das Betätigungsglied freigegeben ist, eine Kraft aus, welche die Riegel 213 in die Sperrstellung zu schieben sucht. Je nachdem, wie die Riegel 213 auf die Rastöffnungen 212 ausgerichtet sind, werden sie, wie Fig. 9b zeigt, in diese vollständig, unvollständig oder gar nicht hineingeschoben. Der letztgenannte Fall tritt dann auf, wenn das freie Ende eines Riegels 213 in Anlage an den Kopf eines der Zähne 211 kommt. Wenn das Betätigungsglied freigegeben ist, wird die Schlingfeder 214 derart blockiert, daß sie ihren Durchmesser nicht mehr verringern, sondern nur noch vergrößern kann. Hierdurch verhindert die Schlingfeder 214, daß diejenigen Riegel 213, welche mit der einen Flanke ihres Endabschnittes 213' an der Flanke einer der Rastöffnungen 212 anliegen und den Gelenkbeschlag spielfrei stellen, durch eine Belastung des Gelenkbeschlages im Sinne einer Verdrehung der beiden Beschlagteile relativ zueinander aus den Rastöffnungen 212 herausgedrückt werden.

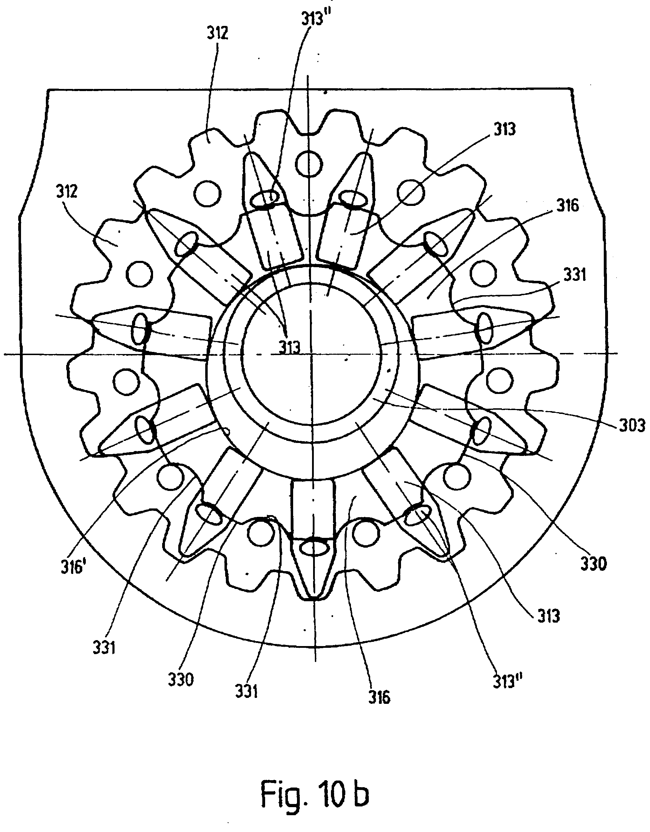

Das in den Fig. 10a und 10b dargestellte vierte Ausführungsbeispiel unterscheidet sich von dem dritten Ausführungsbeispiel im wesentlichen nur durch eine andere Anzahl von Rastöffnungen 312 sowie Regeln 313 und durch eine axial bewegbare Sperrscheibe 316 statt der Schlingfeder 214 oder zusätzlich zu dieser. Ferner hat jeder der gleich ausgebildeten Riegel 313 einen axial abstehenden Nocken 313'' für die Abstützung auf der Sperrscheibe 316, die mit einem zentralen, kreisförmigen Loch 316' versehen ist, dessen Durchmesser auf die exzentrische Lage der Nocken 313'' bezüglich der Gelenkachse 303 abgestimmt ist. Die Sperrscheibe 316 hat längs ihres äußeren Randes gleich ausgebildete Segmente 330 in einer der Zahl der Riegel 313 entsprechenden Anzahl und dazwischen je ein Segment 331, deren Randlinie auf einem im Durchmesser kleineren Kreis um das Zentrum der Sperrscheibe 316 liegen, die beispielsweise aus Federstahl besteht.

Befinden sich alle Riegel 313 in der Entriegelungsstellung, wie Fig. 10a dies zeigt, stützen sich alle Nocken 313'' auf den Segmenten 331 ab. Im gesperrten Zustand, also dann, wenn ein Teil der Riegel 313 sich in der Sperrlage befindet, wie dies Fig. 10b zeigt, stützen sich alle Nocken 313'' auf den Segmenten 330 ab. Die hierfür erforderliche exzentrische Lage der Sperrscheibe 316 ermöglicht deren zentrales Loch 316'.

Für eine Entriegelung braucht nur die Sperrscheibe 316 gedreht und/oder axial verschoben zu werden. Dasselbe gilt für den Fall der Verriegelung. Wenn sich die Riegel 313 in der Sperrlage befinden, können die Segmente 330 durch eine Drehung und/oder axiale Verschiebung der Sperrscheibe 316 unter die Nocken 313'' bewegt werden.

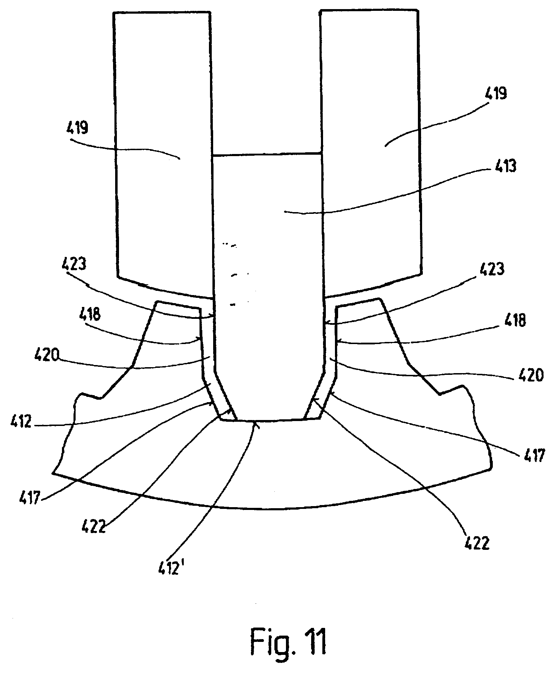

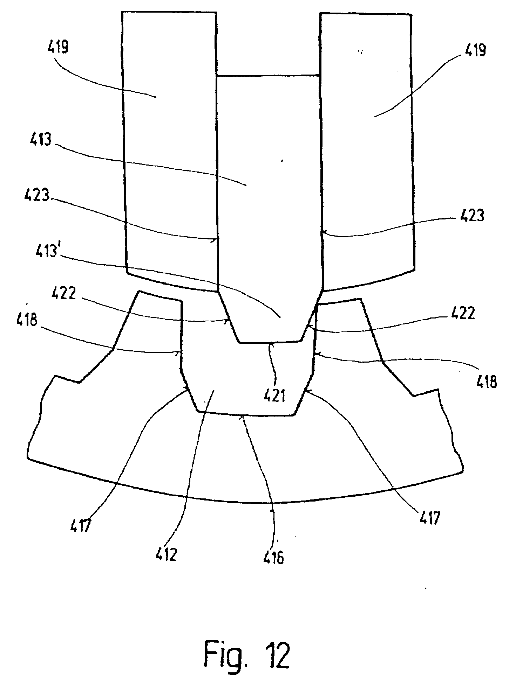

Das fünfte Ausführungsbeispiel gemäß den Fig. 11 und 12 unterscheidet sich im wesentlichen von dem ersten Ausführungsbeispiel nur durch eine abgeänderte Kontur der Endabschnitte 413' der Riegel 413 sowie der Kontur der Rastöffnungen 412. Die Riegel 413 können wie bei dem Ausführungsbeispiel gemäß den Fig. 9a und 9b mit einer nicht dargestellten Schlingfeder verbunden sein. Die Verschiebung der Riegel 413 von der Entriegelungsstellung in die Verriegelungsstellung und umgekehrt kann aber auch mit anderen Mitteln erfolgen.

Wie die Fig. 11 und 12 zeigen, sind die die Rastöffnungen 412 begrenzenden Flanken nur in einem sich an den Grund 411' anschließenden ersten Abschnitt 417 gegenüber der in einer Radialebene liegenden Symmetrieebene im gleichen Maße zur einen bzw. anderen Seite hin geneigt. Die beiden ersten Abschnitte 417 jeder Rastöffnung 412 definieren also einen sich radial nach innen hin verbreiternden, trapezförmigen Bereich. An den ersten Abschnitt beider Flanken schließt ein in radialer Richtung etwas größerer zweiter Abschnitt 418 an. Diese beiden Abschnitte 418 verlaufen parallel zueinander und zu der radialen Längsmittelebene.

Die Riegel 413, die alle gleich ausgebildet und in radialer Richtung verschiebbar von zwei Führungskörpern 419 geführt sind, haben im Ausführungsbeispiel eine etwas geringere Breite als die Rastöffnungen 412. Wenn, wie in Fig. 11 dargestellt, die Längsmittelebene des Riegels 413 in der Längsmittelebene einer der Rastöffnungen 412 liegt und der Riegel 413 voll in Eingriff mit dieser Rastöffnung 412 ist, ist deshalb zwischen den Flanken des in die Rastöffnungen 412 eingreifenden Endabschnittes 413' des Riegels 413 und den Flanken der Rastöffnung ein Zwischenraum 420 vorhanden. Durch diese kleineren Abmessungen des Endabschnittes 413' der Riegel 413 im Vergleich zu den Abmessungen der Rastöffnungen 412 läßt mit einer geringeren Riegelzahl die Forderung erfüllen, daß in jeder beliebigen Winkellage der beiden Beschlagteile wenigstens einer der Riegel 413 in vollständigem Eingriff mit einer der Rastöffnungen 412 steht.

Im Anschluß an das stirnseitige Ende 421 jedes Riegels 413 weisen die den Endabschnitt 413' begrenzenden Flanken je einen ersten Abschnitt 422 auf. Diese beiden ersten Abschnitte 422 sind im gleichen Maße wie die ersten Abschnitte 417 der Rastöffnungen 412 gegenüber der Längsmittelebene des Riegels 413 geneigt. An die ersten Abschnitte 422 schließt sich je ein zweiter Abschnitt 423 an. Diese beiden zweiten Abschnitte 423 verlaufen parallel zur Längsmittelebene und liegen in den beiden Ebenen, welche die von den Führungskörpern 419 geführten Seitenflächen definieren.

Da der Gelenkbeschlag mittels der Riegel 413 in jeder beliebigen Schwenkstellung spielfrei verriegelbar ist, ist in jeder Schwenkstellung nicht nur wenigstens einer der Riegel 413 in vollem Eingriff mit einer der Rastöffnungen 412. Außerdem sind wenigstens zwei der Riegel 413 in unvollständigem Eingriff mit zwei der Rastöffnungen 412, und zwar derart, daß bei dem einen Riegel 413 der eine erste Abschnitt 422 und bei dem anderen Riegel der andere erste Abschnitt 422 an der Kante anliegt, welche der zweite Abschnitt 418 der Rastöffnung 412 mit der Stirnfläche des sich anschließenden Zahnes bildet.

Sind die nur teilweise in eine der Rastöffnungen 412 eingreifenden Riegel 413 gegen die Sperrstellung hin mittels einer Feder belastet, dann kann man die Federkraft so groß wählen, daß bei einer Gebrauchsbelastung des Gelenkbeschlages trotz der fehlenden Selbsthemmung diese Riegel 413 nicht aus der sie aufnehmenden Rastöffnung 412 hinausgedrängt werden. Bei einer Crashbelastung des Gelenkbeschlages ist es hingegen zulässig, daß diejenigen Riegel 413, die nur teilweise im Eingriff mit einer der Rastöffnungen 412 sind und den Beschlag spielfrei stellen, gegebenenfalls aus den Rastöffnungen wenigsten ein Stück weit hinausgedrängt werden, weil die dadurch bedingte Schwenkbewegung der beiden Beschlagteile relativ zueinander sehr gering ist. Diese geringe Schwenkbewegung tritt dann auf, wenn keiner der sich in einem vollständigen Eingriff mit einer der Rastöffnungen 412 befindenden Riegel 413 an derjenigen Flanke der Rastöffnung anliegt` an die er für einen Formschluß in Anlage kommen muß. Erst bei einer Crashbelastung kommt er auf der einen Seite mit seinem zweiten Abschnitt 423 in Anlage an den zweiten Abschnitt 418 der Rastöffnung 412. Da diese beiden zweiten Abschnitte mit Selbsthemmung aneinander anliegen, ist nunmehr der Gelenkbeschlag formschlüssig verriegelt, was eine weitere Schwenkbewegung der Beschlagteile und eine Verschiebung der Riegel 413 ausschließt.

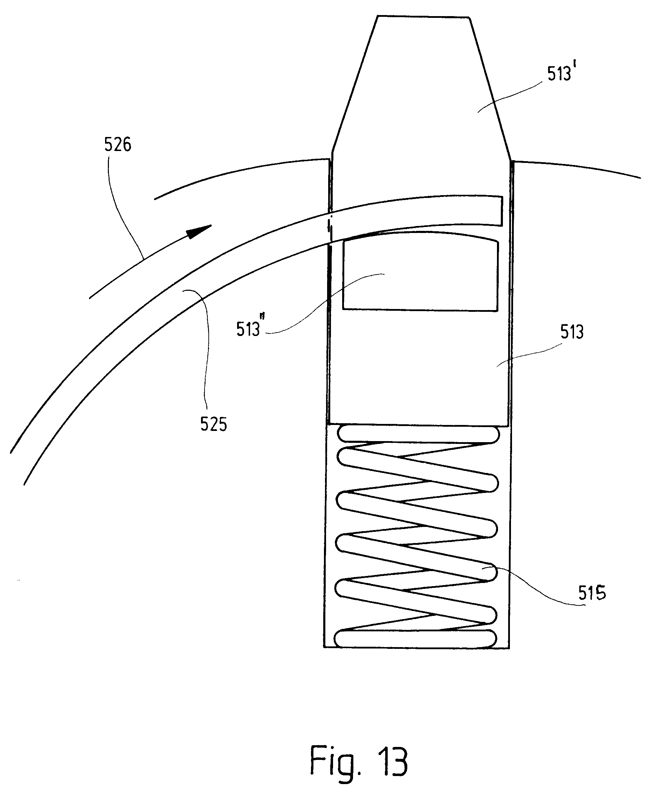

Das in Fig. 13 dargestellte Ausführungsbeispiel soll nur zeigen, daß die Riegel 513 bei einem Gelenkbeschlag der in Rede stehenden Art sich mit ihrem radial nach innen weisenden Ende auf je einer Druckfeder 515 abstützen können, welche den Riegel 513 im Sinne einer Verschiebung radial nach außen belastet.

Für eine Verschiebung der Riegel 513 radial nach innen in die Entriegelungsstellung ist jeder Riegel 513 auf derjenigen Seite, auf der bei dem Ausführungsbeispiel gemäß den Fig. 9a und 9b die Nuten 213'' vorgesehen sind, mit einem Nocken 524 versehen, dessen radial nach außen weisende Nockenfläche in Richtung auf die Innenfläche einer Kulisse 525 gedrückt wird. Die Kulisse 525 ist an einem konzentrisch zum Gelenkzapfen angeordneten und auf diesem drehbar gelagerten sowie mit einer Auslöseeinrichtung gekoppelten Kulissenträger vorgesehen. Durch eine Betätigung der Auslöseeinrichtung im Sinne eines Entriegelns des Beschlages wird jeder der einem Riegel 513 zugeordneten Abschnitte der Kulisse 525 in Richtung des Pfeiles 526 bewegt, wodurch alle Riegel 513 in ihre Entriegelungsstellung bewegt werden. Eine Bewegung der Kulisse 525 in entgegengesetzter Richtung ermöglicht es den Druckfedern 515, die Riegel 513 in ihre Sperrstellung oder gegen diese hin zu verschieben.

Der in Fig. 13 dargestellte Riegel 513 weist einen trapezförmig ausgebildeten Endabschnitt 513' auf. Selbstverständlich könnte der Endabschnitt 513' auch so wie der Endabschnitt 113' der Riegel 113 ausgebildet sein, wobei dann die Rastöffnungen ebenfalls parallel zur radialen Längsmittelebene verlaufende Flanken oder Flankenabschnitte haben müßte.

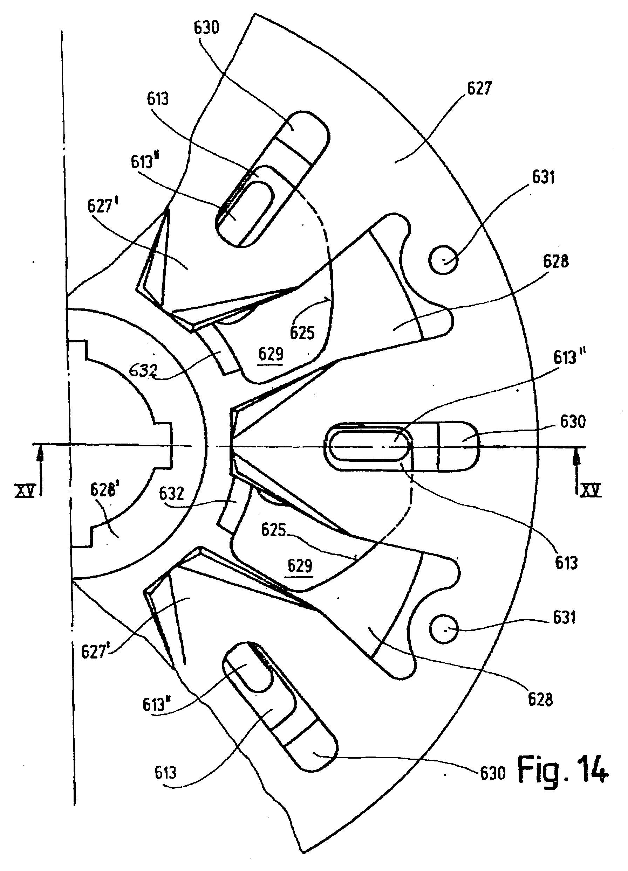

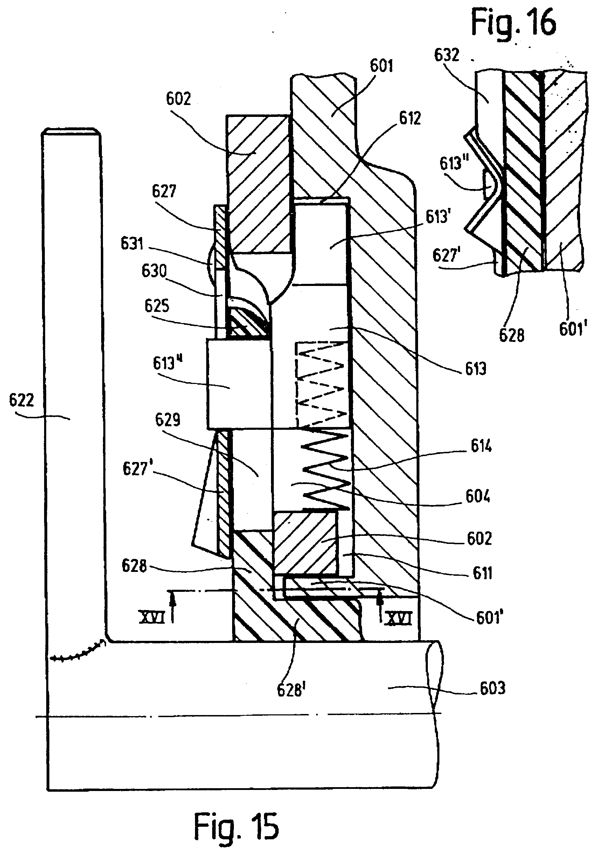

Das in den Fig. 14 bis 16 dargestellte siebte Ausführungsbeispiel des erfindungsgemäßen Gelenkbeschlages weist wie die zuvor beschriebenen Ausführungsbeispiele einen mit der tragenden Struktur der Rückenlehne zu verbindenden oberen Beschlagteil 601 und einen mit der tragenden Struktur des Sitzteils zu verbindenden unteren Beschlagteils 602 auf, mit dem der obere Beschlagteil 601' um einen Gelenkzapfen 603 drehbar verbunden ist. Wie Fig. 15 zeigt, ist der obere Beschlagteil 601 mit einer zur Gelenkachse konzentrischen, zum unteren Beschlagteil 602 hin offenen, ringscheibenförmigen Vertiefung 611 versehen, die radial nach außen durch eine gleichmäßig über den Umfang verteilt angeordnete Rastöffnung 612 bildende Innenverzahnung begrenzt ist. Der axial neben dem oberen Beschlagteil 601 liegende untere Beschlagteil 602 greift in die Vertiefung 611 ein und ist in diesem eingreifenden Bereich mit radial verlaufenden Führungsnuten 604 für je einen in der zugeordneten Führungsnut radial verschiebbaren Riegel 613 versehen. Die Zahl der Rastöffnungen 612, die größer ist als die Zahl der Riegel 613, ist wie bei den zuvor beschriebenen Ausführungsbeispielen so gewählt, daß wenigstens einer der Riegel 613 in jeder beliebigen Winkelstellung des oberen Beschlagteils 601 in eine von dessen Rastöffnungen 612 einfallen kann. Wie bei dem Ausführungsbeispiel gemäß Fig. 13 weisen die Riegel 613 einen sich radial nach außen verjüngenden, trapezförmigen Endabschnitt 613' für den Eingriff in die Rastöffnungen 612 auf. Statt der Trapezform käme auch eine Keilform in Frage. Die Neigung der Flanken des Endabschnittes 613' und der Flanken der korrespondierend ausgebildeten Rastöffnungen 612 ist so gewählt, daß keine Selbsthemmung auftritt.

An dem radial innen liegenden Ende jeder der Führungsnuten 604 stützt sich je eine vorgespannte Schraubendruckfeder 614 ab, welche in ein Sackloch des zugeordneten Riegels 613 eingreift und diesen radial nach außen drückt.

An der dem oberen Beschlagteil 601 abgewandten Seitenfläche weist, wie es insbesondere Fig. 15 zeigt, jeder der Riegel 613 einen Nocken 613'' auf, der im Ausführungsbeispiel mit der radial nach innen weisenden Endfläche des Riegels 613 bündig abschließt. Wie Fig. 14 erkennen läßt, erstreckt sich der Nocken 613'' in radialer Richtung und ist seitlich durch parallel zur Längsmittelebene verlaufende Flächen begrenzt, während die radial äußere und radial innere Begrenzungsfläche zylindrisch gekrümmt ist. Die Nocken 613'' sind im Ausführungsbeispiel nicht auf die Längsmittelebene der Riegel 613 ausgerichtet, sondern, wie Fig. 14 erkennen läßt, gegen die eine Seitenfläche hin versetzt.

Axial neben dem unteren Beschlagteil 602 auf dessen den, oberen Beschlagteil 601 abgewandten Seite ist eine im Ausführungsbeispiel aus Kunststoff bestehende Steuerscheibe 628 angeordnet, die mit einer Nabe 628' in eine die ringscheibenförmige Vertiefung 611 des oberen Beschlagteils 601 radial nach innen begrenzende Nabe 601' eingreift und relativ zu letzterer drehbar ist. Die Bohrung der Nabe 628 ist, wie Fig. 14 zeigt, mit Längsnuten für eine drehfeste Verbindung mit dem Gelenkzapfen 603 versehen, der mittels eines Betätigungshebels 622 drehbar ist. Für jeden der Nocken 613'' ist die Steuerscheibe 628 mit einen, Durchbruch 629 versehen, den der zugeordnete Nocken 613'' vollständig durchdringt, wie Fig. 15 zeigt. Die äußere Begrenzung der gleich ausgebildeten Durchbrüche 629 bildet eine Steuerkurve 625 für den zugeordneten Nocken 613'', um jeden der Nocken 613'' entgegen der Kraft der Schraubendruckfeder 614 in seine Entriegelungsstellung verschieben zu können, in welcher er außer Eingriff ist mit den Rastöffnungen 612.

Wenn einer der Nocken 613'' in vollem Eingriff mit einer der Rastöffnungen 612 ist, liegt der Nocken 613'' nahezu am einen Endabschnitt der Steuerkurve 625 an, wie dies Fig. 14 für den mittleren Nocken 613'' Zeigt. Wenn alle Nocken 613'' in die Entriegelungsstellung bewegt werden sollen, wird mittels des Betätigungshebels 622 die Steuerscheibe 628 gedreht, und zwar entgegen dem Uhrzeigersinn bei einer Blickrichtung gemäß Fig. 14. Dabei kommt zunächst nur die Steuerkurve 625 in Anlage an den Nocken 613'' des sich in vollständigem Eingriff mit einer der Rastöffnungen 612 befindenden Riegels 613, ohne diesen radial nach innen zu verschieben. Erst im Anschluß an diesen auf einer zum Gelenkzapfen 603 konzentrisch verlaufenden Kreisbahn liegenden Abschnitt der Steuerkurve 625 folgt ein Abschnitt, der den Nocken 613'' soweit radial nach innen zu verschieben vermag, bis der Riegel 613 nicht mehr in Eingriff mit einer der Rastöffnungen 612 ist.

Die dem oberen Beschlagteil 601 abgewandte Seite der Steuerscheibe 628 fluchtet mit der dem oberen Beschlagteil 601 abgewandten Seite der nicht in die ringscheibenförmige Vertiefung 611 eingreifenden Randzone des unteren Beschlagteils 602. An der dem oberen Beschlagteil 601 abgewandten Seite dieser Randzone liegt die äußere Randzone einer Sperrscheibe 627 an und ist, im Ausführungsbeispiel mittels mehrerer Niete 631, mit dem unteren Beschlagteil 602 fest verbunden. Die aus Federblech bestehende Sperrscheibe 627 weist, wie Fig. 14 zeigt, radial nach innen verlaufende, gleichausgebildete Zungen 627' auf, von denen je eine auf jeden der Nocken 613'' ausgerichtet ist. Die Zunge 632 ist mit einem mittig angeordneten, radial verlaufenden, langlochartigen Durchbruch 630 versehen. Diese Durchbrüche 630 sind so bezüglich des zugeordneten Nockens 613'' angeordnet, daß dieser nur dann vollständig in den zugeordneten Durchbruch 630 eingreift und seine radial nach innen weisende, zylindrisch gekrümmte Endfläche sich nur dann am radial inneren Ende des Durchbruches 630 abstützen kann, wenn der Riegel 613 sich in seiner Verriegelungsstellung befindet, also vollständig in eine der Rastöffnungen 612 eingreift, wie dies für den Riegel 613 in Fig. 15 und den mittleren Riegel 613 in Fig. 14 dargestellt ist. Der Nocken 613'' durchdringt dann vollständig den Durchbruch 630, wie dies Fig. 15 zeigt, und wird von der in der Ebene der Sperrscheibe 627 liegenden Zunge 627' formschlüssig gegen eine Verschiebung radial nach innen gesichert. Obwohl zwischen dem Endabschnitt 613' des Riegels 613 und den Flanken der ihn aufnehmenden Rastöffnung 612 keine Selbsthemmung vorhanden ist, ist deshalb gewährleistet, daß auch bei hohen Belastungen, denen der Gelenkbeschlag beispielsweise in einem Crashfall ausgesetzt sein kann, die Verriegelung des oberen Beschlagteils 601 mit dem unteren Beschlagteil 602 voll wirksam bleibt.

Um die Verriegelung des Gelenkbeschlages zu lösen, also die sich in Eingriff mit einer der Rastöffnungen 612 befindenden Riegel 613 radial nach innen in die Entriegelungsstellung bewegen zu können, müssen die Zungen 627' im Bereich des Durchbruches 630 von der Steuerscheibe 628 wegbewegt werden. Hierfür ist für jede der Zungen 627' an der Steuerscheibe 628 ein sich in deren Drehrichtung erstreckender Nocken 632 vorgesehen, der sich bei einer Drehbewegung der Steuerscheibe 628 unter das freie Ende der zugeordneten Zunge 627' schiebt und diese soweit von der Steuerscheibe 628 wegbiegt, daß das nach innen weisende Ende des Nockens 613'' nicht mehr in den Durchbruch 629 eingreift. Dieses vor einer Verschiebung der Riegel 613 radial nach innen erforderliche Ausbiegen der Zungen 627 ist der Grund dafür, warum die Steuerkurve 625 einen Anfangsabschnitt aufweist, in welchem die Drehbewegung der Steuerscheibe 628 keine Verschiebung des Nockens 613'' nach innen bewirkt.

Um den freien Endabschnitt der Zungen 627' zu versteifen und das Untergreifen des Zungenendes durch den zugeordneten Nocken 632 zu erleichtern, sind, wie insbesondere Fig. 16 zeigt, die beiden Randzonen des Endabschnittes jeder Zunge 627 etwas aus der Zungenebene herausgebogen.

Wenn sich die Steuerscheibe 628 in ihrer Ausgangslage befindet, in welcher die Nocken 632 und die Steuerkurven 625 nicht wirksam sind, liegen diejenigen Zungen 627' im Bereich des inneren Endes ihres Durchbruches 630 auf den Nocken 613'' derjenigen Riegel 613 auf, welche nicht oder nicht in vollem Eingriff mit den Rastöffnungen 612 sind, wie dies bei den in Fig. 14 oben und unten dargestellten Riegeln 613 der Fall ist.

## Patentansprüche

1. Gelenkbeschlag für Fahrzeugsitze, insbesondere Kraftfahrzeugsitze, mit zwei um die Gelenkachse relativ zueinander schwenkbaren Beschlagteilen, von denen der eine mit konzentrisch zur Gelenkachse und über einen Winkel von 360° verteilt angeordneten Rastöffnungen und der andere mit in diese Rastöffnungen einführbaren Rastelementen versehen ist, sowie mit einer Betätigungseinrichtung für die Rastelemente, dadurch gekennzeichnet, daß
a) alle Rastelemente (13; 113; 213; 313; 413; 513; 613) unabhängig voneinander gegen die Rastöffnungen (12; 112; 212; 312; 412; 612) hin bewegbar sind und
b) die Rastelemente (13; 113; 213; 313; 413; 513; 613) bezüglich der Rastöffnungen (12; 112; 212; 312; 412; 612) eine Anordnung aufweisen, welche in jeder Winkelstellung innerhalb des Schwenkbereiches des einen Beschlagteils (1; 101; 601) relativ zum anderen Beschlagteil (2; 102; 602) ein Eingreifen wenigstens eines der Rastelemente (13; 113; 213; 313; 413; 513; 613) in eine der Rastöffnungen (12; 112; 212; 312; 412; 612) gestattet.

2. Gelenkbeschlag nach Anspruch 1, dadurch gekennzeichnet, daß der Teilungswinkel der Rastöffnungen (12; 112; 212; 312; 412; 612) ungleich dem Teilungswinkel der Rastelemente (13; 113; 213; 313; 413; 513; 613) ist.

3. Gelenkbeschlag nach Anspruch 1 oder 2, dadurch gekennzeichnet, daß die Rastelemente (13; 113; 213; 313; 413; 513; 613) sich zu dem gegen die Rastöffnungen (12; 112; 212; 312; 412; 612) weisenden Ende hin in Schwenkrichtung verjüngen.

4. Gelenkbeschlag nach einem der Ansprüche 1 bis 3, dadurch gekennzeichnet, daß die Rastöffnungen (12; 112; 212; 312; 412; 612) gegen die Rastelemente (13; 113; 213; 313; 413; 613) hin eine in der Schwenkrichtung größer werdende Weite haben.

5. Gelenkbeschlag nach einem der Ansprüche 1 bis 4, dadurch gekennzeichnet, daß die Rastelemente als im wesentlichen in radialer Richtung verschiebbare Riegel (13; 113; 213; 313; 413; 513; 613) und die Rastöffnungen (12; 112; 212; 312; 412; 612) als sich im wesentlichen in radialer Richtung er streckende, in Schwenkrichtung durch seitliche Flanken begrenzte Räume gebildet sind.

6. Gelenkbeschlag nach einem der Ansprüche 1 bis 5, dadurch gekennzeichnet, daß die Rastelemente (13; 113; 213; 313; 413; 513; 613) radial innerhalb einer Ringzone angeordnet sind, in welcher die im wesentlichen radial nach innen offenen Rastöffnungen (12; 112; 212; 312; 412; 612) vorgesehen sind.

7. Gelenkbeschlag nach Anspruch 5 oder 6, dadurch gekennzeichnet, daß die Rastöffnungen (12; 112; 212; 312; 412; 612) durch die Lücken zwischen den Zähnen (10; 110; 211) eines zur Gelenkachse (3; 303) konzentrischen Zahnkranzes gebildet sind und die Riegel (13; 113; 213; 313; 413; 513; 613) im Bereich ihres in die Lücken einführbaren freien Endabschnittes (13'; 113'; 213'; 413'; 613') ein dem Profil der Lücken geometrisch ähnliches Profil haben.

8. Gelenkbeschlag nach Anspruch 7, dadurch gekennzeichnet, daß die Abmessungen des in die Rastöffnungen (12; 112; 212; 312; 412; 612) eingreifenden Endabschnittes (13'; 113'; 213'; 613') der Riegel (13; 113; 213; 313; 413; 613) in der Schwenkrichtung höchsten so groß sind wie die entsprechenden Abmessungen der Rastöffnungen (12; 112; 212; 312; 412; 612).

9. Gelenkbeschlag nach einem der Ansprüche 5 bis 8, dadurch gekennzeichnet, daß die Riegel (13; 113; 613) in einem Ringraum (11) angeordnet sind, der in axialer Richtung durch die beiden Beschlagteile (1, 2; 101, 102; 601, 602) begrenzt ist.

10. Gelenkbeschlag nach einem der Ansprüche 1 bis 9, dadurch gekennzeichnet, daß jedes Rastelement (13; 113; 213; 513; 613) zu den Rastöffnungen (12; 112; 212; 612) hin von je einem vorgespannten Federelement (14; 214; 514; 614) belastet ist.

11. Gelenkbeschlag nach Anspruch 10, dadurch gekennzeichnet, daß alle Federelemente (14) einstückig mit einer Trägerscheibe (16) ausgebildet sind, von der die zungenartig ausgebildeten Federelemente (14) abstehen.

12. Gelenkbeschlag nach einem der Ansprüche 9 bis 11, dadurch gekennzeichnet, daß eine Betätigungseinrichtung (20) einen konzentrisch zur Gelenkachse (3) angeordneten, in Schwenkrichtung drehbaren Ring (21) aufweist, der für jedes Federelement (14) mit einer an dieses anlegbaren und bei einer Drehbewegung in der Schwenkrichtung im Sinne einer Erhöhung der Spannung bewegenden Nockenfläche (23) versehen ist.

13. Gelenkbeschlag nach einem der Ansprüche 1 bis 12, dadurch gekennzeichnet, daß ein die radiale Bewegung der Riegel (13; 113; 213; 313; 613) begrenzendes Element (214; 316; 627) vorhanden ist, welches im verriegelten Zustand ein vollständiges Austreten der eingefallenen Riegel aus den entsprechenden Rastöffnungen verhindert und den Verriegelungszustand somit formschlüssig sichert.

14. Gelenkbeschlag nach Anspruch 13, dadurch gekennzeichnet, daß das Element (316) derart gesteuert ist, daß auch bei Winkeländerungen des Gelenkbeschlages im entriegelten Zustand zumindest einer der Riegel (313) in eine der Rastöffnungen (312) eingedrückt ist, ohne jedoch die Flanken dieser Rastöffnungen zu berühren.

15. Gelenkbeschlag nach einem der Ansprüche 1 bis 14, dadurch gekennzeichnet, daß zwischen denjenigen Flächen (422) der Rastelemente (13; 113; 213; 313; 413), welche für eine spielfreie Verriegelung des Beschlages bei Gebrauchslast an den Rastöffnungen (12; 112; 212; 312; 412) anliegen, und diesen Berührungsstellen der Rastöffnungen (12; 112; 212; 312; 412) ein außerhalb des Selbsthemmungsbereichs liegender Reibschluß vorgesehen ist.

16. Gelenkbeschlag nach Anspruch 15, gekennzeichnet durch Mittel (316; 418; 423; 627) zur formschlüssigen Sicherung der Rastelemente (313; 413; 613) in deren Sperrlage.

17. Gelenkbeschlag nach Anspruch 16, dadurch gekennzeichnet, daß die Mittel die Rastelemente (413) nur bei über der Gebrauchslast liegenden Belastungen formschlüssig in der Sperrlage sichern.

18. Gelenkbeschlag nach einem der Ansprüche 15 bis 17, gekennzeichnet durch eine mit allen bezüglich der Gelenkachse radial verschiebbaren Rastelementen (213) in Verbindung stehende Schlingfeder (215), die mehr als eine vollständige Windung aufweist.

19. Gelenkbeschlag nach Anspruch 18, dadurch gekennzeichnet, daß die Schlingfeder aus wenigstens zwei Schlingfederelementen mit sich über-lappenden Abschnitten besteht, wobei jedes Schlingfederelement weniger als eine vollständige Windung bildet.

20. Gelenkbeschlag nach Anspruch 18 oder 19, dadurch gekennzeichnet, daß die Schlingfeder (215) zum Zwecke der gleichzeitigen Bewegung aller Rastelemente (213) in ihre Entriegelungsstellung zusammenziehbar ist.

21. Gelenkbeschlag nach einem der Ansprüche 18 bis 20, dadurch gekennzeichnet, daß die Schlingfeder (215) für jedes der Rastelemente (213) die es in die Verregelungsstelung zu drücken und in dieser zu halten suchende Feder bildet.

22. Gelenkbeschlag nach einem der Ansprüche 18 bis 21, dadurch gekennzeichnet, daß die Schlingfeder (215) in dem die Rastelemente (213) in Eingriff mit den Rastöffnungen (212) haltenden Zustand blockierbar ist.

23. Gelenkbeschlag nach einem der Ansprüche 15 bis 22, dadurch gekennzeichnet, daß die die Rastelemente in deren Sperrlage formschlüssig sichernden Mittel durch zusammenwirkende Flächen (418, 423) der Rastelemente (413) und der Rastöffnungen (412) gebildet sind.

24. Gelenkbeschlag nach einem der Ansprüche 16 bis 22, dadurch gekennzeichnet, daß die die Rastelemente in deren Sperrlage formschlüssig sichernden Mittel durch eine Sperrscheibe (316; 627) gebildet sind, welche die sich in der Sperrstellung befindenden Rastelemente (313) formschlüssig gegen eine Verschiebung in die Entriegelungsstellung sichert.

25. Gelenkbeschlag nach Anspruch 24, dadurch gekennzeichnet, daß die Sperrscheibe (316) längs ihres Umfanges eine der Zahl der Rastelemente (313) entsprechende Anzahl von Segmenten (330) und zwischen diesen je ein Zwischensegment (331) aufweist, und daß die äußere Randlinie der Segmente (330) auf einer Kreislinie mit einem größeren Durchmesser liegt als die äußere Randlinie der Zwischensegmente (331).

26. Gelenkbeschlag nach Anspruch 23, dadurch gekennzeichnet, daß bei einer Ausbildung der Rastöffnungen (412) als Zahnlücken und der Rastelemente (413) als Zähne mit korrespondierend zu den Rastöffnungen (412) ausgebildetem Endabschnitt (413') dieser außer einem am Zahnkopf beginnendem Bereich (422) zunehmender Breite einen Bereich (423) von zumindest im wesentlichen konstanter Breite aufweist, und daß die Zahnlücken (412) von zwei entsprechenden Flächenpaaren (417, 418) begrenzt sind, so daß bei einem unvollständigen Eingriff eines Zahnes (413) in die zugeordnete Zahnlücke (412) nur der selbsthemmungsfreie Reibschluß und erst bei zumindest annähernd vollständigem Eingriff ein Formschluß vorhanden ist.

27. Gelenkbeschlag nach einem der Ansprüche 10 bis 26, dadurch gekennzeichnet, daß bei einer Ausbildung der Rastelemente als radial verschiebbare Riegel (513; 613), die von je einer vorgespannten Feder (514; 614) mit einer gegen die Sperrstellung gerichteten Kraft beaufschlagt sind, jeder Riegel (413) einen Nocken (513''; 613'') aufweist, welchen die Feder (514; 614) in Richtung auf eine quer zur Verschieberichtung des Riegels (514; 614) verlaufende und in dieser Richtung bewegbare Steuerkurve (525; 625) belastet.

28. Gelenkbeschlag nach Anspruch 27, dadurch gekennzeichnet, daß jede Steuerkurve (625) an einer konzentrisch zur Gelenkachse drehbar angeordneten Steuerscheibe (628) vorgesehen ist.

29. Gelenkbeschlag nach Anspruch 28, dadurch gekennzeichnet, daß jede Steuerkurve (625) durch die Berandung je eines Durchbruchs (629) der Steuerscheibe (628) gebildet ist, in den der in axialer Richtung vom Riegel (614) abstehende Nocken (613'') eingreift.

30. Gelenkbeschlag nach einem der Ansprüche 24 oder 27 bis 29, dadurch gekennzeichnet, daß die aus Federmaterial bestehende Sperrscheibe (627) eine der Anzahl der Riegel (613) entsprechende Zahl von Zungen (627') aufweist, von denen je eine auf jeden Riegel (613) ausgerichtet und mit einem Durchbruch (630) für den Eingriff des Nockens (613'') des zugeordneten Riegels (613) versehen ist.

31. Gelenkbeschlag nach Anspruch 30, dadurch gekennzeichnet, daß die Form der Durchbrüche (630) der Sperrscheibe (627) so gewählt ist, daß nur die Nocken (613'') der sich in ihrer Sperrstellung befindenden Riegel (613) formschlüssig von der Berandung des zugeordneten Durchbruches (630) gesichert sind.

32. Gelenkbeschlag nach Anspruch 30, dadurch gekennzeichnet, daß für jede der Zungen (627') an der Steuerscheibe (628) ein Steuerkörper (632) vorgesehen ist, der bei einer Drehbewegung der Steuerscheibe (628) im Sinne einer Verschiebung aller Riegel (613) in ihre Entriegelungsstellung die zugeordnete Zunge (627') in eine den Nocken (613'') freigebende Freigabestellung biegt, in welcher die Zunge (627') gespannt ist.

33. Gelenkbeschlag nach Anspruch 32, dadurch gekennzeichnet, daß die Sperrscheibe (627) neben der einen und der Riegel (613) neben der anderen Stirnfläche der Steuerscheibe (628) angeordnet sind, daß die axial federnden Zungen (627') radial verlaufen und daß die Zungen (627') mittels der Steuerkörper, die als Nocken (632) an der der Sperrscheibe (627) zugekehrten Stirnfläche der Steuerscheibe (628) ausgebildet sind, im Bereich ihres Durchbruches (630) von der Steuerscheibe (628) weg bewegbar sind.

## Claims

1. Hinged mounting for vehicle seats, in particular motor vehicle seats, with two mounting parts able to tilt relative to each other about the hinge axis, whereof one mounting is provided with click-stop openings arranged concentrically with the hinge axis and distributed over an angle of 360° and the other is provided with click-stop members able to be introduced into these click-stop openings, and with an actuating device for the click-stop members, characterised in that
a) all the click-stop members (13; 113; 213; 313; 413; 513; 613) are movable independently of each other towards the click-stop openings (12; 112; 212; 312; 412; 612) and
b) the click-stop members (13; 113; 213; 313; 413; 513; 613) have an arrangement with respect to the click-stop openings (12; 112; 212; 312; 412; 612), which in each angular position within the tilting range of one mounting part (1; 101; 601) relative to the other mounting part (2; 102; 602) allows an engagement of at least one of the click-stop members (13; 113; 213; 313; 413; 513; 613) in one of the click-stop openings (12; 112; 212; 312; 412; 612).

2. Hinged mounting according to Claim 1, characterised in that the separation angle of the click-stop openings (12; 112; 212; 312; 412; 612) is unequal to the separation angle of the click-stop members (13; 113; 213; 313; 413; 513; 613).

3. Hinged mounting according to Claim 1 or 2, characterised in that the click-stop members (13; 113; 213; 313; 413; 513; 613) taper in the tilting direction towards the end pointing towards the click-stop openings (12; 112; 212; 312; 412; 612).

4. Hinged mounting according to one of Claims 1 to 3, characterised in that the click-stop openings (12; 112; 212; 312; 412; 612) have a width becoming larger in the tilting direction, towards the click-stop members (13; 113; 213; 313; 413; 613).

5. Hinged mounting according to one of Claims 1 to 4, characterised in that the click-stop members are formed as bolts (13; 113; 213; 313; 413; 513; 613) able to slide essentially in the radial direction and the click-stop openings (12; 112; 212; 312; 412; 612) are formed as spaces extending essentially in the radial direction and defined in the tilting direction by lateral flanks.

6. Hinged mounting according to one of Claims 1 to 5, characterised in that the click-stop members (13; 113; 213; 313; 413; 513; 613) are arranged radially within an annular region, in which are provided the click-stop openings (12; 112; 212; 312; 412; 612) which are open essentially radially inwards.

7. Hinged mounting according to Claim 5 or 6, characterised in that the click-stop openings (12; 112; 212; 312; 412; 612) are formed by the gaps between the teeth (10; 110; 211) of a toothed rim concentric with the hinge axis (3; 303) and in the region of their free end section (13'; 113'; 213'; 413'; 613') able to be introduced into the gaps, the bolts (13; 113; 213; 313; 413; 513; 613) have a profile geometrically similar to the profile of the gaps.

8. Hinged mounting according to Claim 7, characterised in that the dimensions of the end section (13'; 113'; 213'; 613') of the bolts (13; 113; 213; 313; 413; 613) engaging in the click-stop openings (12; 112; 212; 312; 412; 612) in the tilting direction are at the most as great as the corresponding dimensions of the click-stop openings (12; 112; 212; 312; 412; 612).

9. Hinged mounting according to one of Claims 5 to 8, characterised in that the bolts (13; 113; 613) are arranged in an annular space (11), which in the axial direction is defined by the two mounting parts (1, 2; 101, 102; 601, 602).

10. Hinged mounting according to one of Claims 1 to 9, characterised in that each click-stop member (13; 113; 213; 513; 613) is loaded towards the click-stop openings (12; 112; 212; 612) by respectively one pre-tensioned spring member (14; 214; 514; 614).

11. Hinged mounting according to Claim 10, characterised in that all the spring members (14) are constructed in one piece -with a support disc (16), from which the spring members (14) constructed in the form of tongues project.

12. Hinged mounting according to one of Claims 9 to 11, characterised in that an actuating device (20) comprises a ring (21) arranged concentrically with respect to the hinge axis (3) and able to rotate in the tilting direction, which for each spring member (14) is provided with a cam surface (23) able to bear against the latter and at the time of a rotary movement moving in the tilting direction in the direction for increasing the tension.

13. Hinged mounting according to one of Claims 1 to 12, characterised in that a member (214; 316; 627) is provided restricting the radial movement of the bolts (13; 113; 213; 313; 613), which in the locked state prevents a complete escape of the bolt which has dropped in, from the corresponding click-stop openings and thus secures the locking state in a form-locking manner.

14. Hinged mounting according to Claim 13, characterised in that the member (316) is controlled so that even in the case of angular variations of the hinged mounting in the unlocked state, at least one of the bolts (313) is pushed into one of the click-stop openings (312), however without coming into contact with the flanks of these click-stop openings.

15. Hinged mounting according to one of Claims 1 to 14, characterised in that provided between those surfaces (422) of the click-stop members (13; 113; 213; 313; 413), which for clearance-free locking of the mounting under a working load bear against the click-stop openings (12; 112; 212; 312; 412) and these contact points of the click-stop openings (12; 112; 212; 312; 412) is frictional locking lying outside the self-locking range.

16. Hinged mounting according to Claim 15, characterised by means (316; 418; 423; 627) for the form-locking securing of the click-stop members (313; 413; 613) in their locked position.

17. Hinged mounting according to Claim 16, characterised in that the means secure the click-stop members (413) in a form-locking manner in the locked position solely in the case of loads exceeding the working load.

18. Hinged mounting according to one of Claims 15 to 17, characterised by a coil spring (215) connected to all the click-stop members (213) which are radially displaceable with respect to the hinge axis, which spring comprises more than one complete turn.

19. Hinged mounting according to Claim 18, characterised in that the coil spring consists of at least two coil spring members with overlapping sections, each coil spring member forming less than one complete turn.

20. Hinged mounting according to Claim 18 or 19, characterised in that the coil spring (215) can be contracted for the purpose of the simultaneous movement of all the click-stop members (213) into their unlocked position.

21. Hinged mounting according to one of Claims 18 to 20, characterised in that for each of the click-stop members (213), the coil spring (215) forms the spring attempting to push it into the locked position and to keep it in the latter.

22. Hinged mounting according to one of Claims 18 to 21, characterised in that the coil spring (215) can be locked in the state keeping the click-stop members (213) in engagement with the click-stop openings (212).

23. Hinged mounting according to one of Claims 15 to 22, characterised in that the means securing the click-stop members in their locked Position in a form-locking manner are formed by cooperating surfaces (418, 423) of the click-stop members (413) and of the click-stop openings (412).

24. Hinged mounting according to one of Claims 16 to 22, characterised in that the means securing the click-stop members in their locked position in a form-locking manner are formed by a locking disc (316; 627), which secures the click-stop members (313) located in the locked position, in a form-locking manner against a displacement into the unlocked position.

25. Hinged mounting according to Claim 4, characterised in that along its periphery the locking disc (316) comprises a number of segments (330) corresponding to the number of click-stop members (313) and between the latter respectively an intermediate segment (331), and that the outer edge of the segments (330) lies on a circular line with a larger diameter than the outer edge of the intermediate segments (331).

26. Hinged mounting according to Claim 23, characterised in that with a construction of the click-stop openings (412) as tooth gaps and of the click-stop members (413) as teeth with an end section (413') constructed to correspond to the click-stop openings (412), apart from a region (422) of increasing width beginning at the tooth head, the end section comprises a region (423) of at least essentially constant width, and that the tooth gaps (412) are defined by two corresponding pairs of surfaces (417, 418), so that in the case of an incomplete engagement of a tooth (413) in the associated tooth gap (412), solely the frictional connection free from self-locking and only in the case of at least approximately complete engagement is form-locking connection provided.

27. Hinged mounting according to one of Claims 10 to 26, characterised in that with a construction of the click-atop members as radially displaceable bolts (513; 613), which are acted upon by respectively one pretensioned spring (514; 614) with a force directed towards the locking position, each bolt (413) comprises a cam (513''; 613''), which loads the spring (514; 614) in the direction of a control cam (525; 625) extending at right angles to the displacement direction of the bolt (514; 614) and movable in this direction.

28. Hinged mounting according to Claim 27, characterised in that each control curve (625) is provided on a control disc (628) arranged to rotate concentrically with respect to the hinge axis.

29. Hinged mounting according to Claim 28, characterised in that each control curve (625) is formed by the boundary of respectively one opening (629) of the control disc (628), in which the cam (613'') projecting from the bolt (614) in the axial direction engages.

30. Hinged mounting according to one of Claims 24 or 27 to 29, characterised in that the locking disc (627) consisting of spring material comprises a number of tongues (627') corresponding to the number of bolts (613), whereof respectively one tongue is aligned with each bolt (613) and provided with an opening (630) for the engagement of the cam (613'') of the associated bolt (613).

31. Hinged mounting according to Claim 30, characterised in that the shape of the opening (630) in the locking disc (627) is chosen so that solely the cams (613'') of the bolts (613) located in their locked position are secured in a form-locking manner by the boundary of the associated opening (630).

32. Hinged mounting according to Claim 30, characterised in that provided for each of the tongues (627') on the control disc (628) is a control member (632), which upon a rotary movement of the control disc (628) in the direction of a displacement of all the bolts (613) into their unlocked position, bends the associated tongue (627') into a release position releasing the cam (613''), in which position the tongue (627') is tensioned.

33. Hinged mounting according to Claim 32, characterised in that the locking disc (627) is located beside one end face of the control disc (628) and the bolt (613) is located beside the other end face of the control disc (628), that the axially resilient tongues (627') extend radially and that the tongues (627') are movable by means of the control members, which are constructed as cams (632) on the end face of the control disc (628) facing the locking disc, in the region of their opening (630) away from the control disc (628).

## Revendications

1. Ferrure articulée pour sièges de véhicules, en particulier pour sièges de véhicules automobiles, comprenant deux parties de ferrure pouvant pivoter l'une par rapport à l'autre autour de l'axe d'articulation, dont l'une comporte des cavités d'enclenchement disposées concentriquement à l'axe d'articulation et réparties sur un angle de 360° et l'autre comprend des éléments d'enclenchement pouvant être introduits dans ces cavités d'enclenchement, ainsi qu'un dispositif d'actionnement des éléments d'enclenchement, caractérisée en ce que
a) tous les éléments d'enclenchement (13 ; 113 ; 213 ; 313 ; 413 ; 513 ; 613) sont déplaçables indépendamment vers les cavités d'enclenchement (12 ; 112 ; 212 ; 312 ; 412 ; 612) et
b) les éléments d'enclenchement (13 ; 113 ; 213 ; 313 ; 413 ; 513 ; 613) présentent par rapport aux cavités d'enclenchement (12 ; 112 ; 212 ; 312 ; 412 ; 612) une disposition qui autorise la pénétration d'au moins l'un des éléments d'enclenchement (13 ; 113 ; 213 ; 313 ; 413 ; 513 ; 613) dans l'une des cavités d'enclenchement (12 ; 112 ; 212 ; 312 ; 412 ; 612) à toute position angulaire comprise dans la plage de pivotement de lune des parties de la ferrure (1 ; 101 ; 601) par rapport à l'autre partie de la ferrure (2 ; 102 ; 602).

2. Ferrure articulée selon la revendication 1, caractérisée en ce que le pas angulaire des cavités d'enclenchement (12 ; 112 ; 212 ; 312 ; 412 ; 612) est différent du pas angulaire des éléments d'enclenchement (13 ; 113 ; 213 ; 313 ; 413 ; 513 ; 613).

3. Ferrure articulée selon la revendication 1 ou 2, caracterisée en ce que les éléments d'enclenchement (13 ; 113 ; 213 ; 313 ; 413 ; 513 ; 613) se rétrécissent dans la direction de pivotement vers l'extrémité tournée vers les cavités d'enclenchement (12 ; 112 ; 212 ; 312 ; 412 ; 612).

4. Ferrure articulée selon l'une des revendications 1 à 3, caractérisée en ce que les cavités d'enclenchement (12 ; 112 ; 212 ; 312 ; 412 ; 612) ont une largeur qui augmente dans la direction de pivotement vers les éléments d'enclenchement (13 ; 113 ; 213 ; 313 ; 413 ; 513 ; 613).

5. Ferrure articulée selon l'une des revendications 1 à 4, caractérisée en ce que les éléments d'enclenchement (13 ; 113 ; 213 ; 313 ; 413 ; 513 ; 613) sont formés de verrous (13 ; 113 ; 213 ; 313 ; 413 ; 513 ; 613) déplaçables sensiblement en direction radiale et les cavités d'enclenchement (12 ; 112 ; 212 ; 312 ; 412 ; 612) sont formées d'espaces orientés sensiblement en direction radiale et délimités dans la direction de pivotement par des flancs latéraux.

6. Ferrure articulée selon l'une des revendications 1 à 5, caractérisée en ce que les éléments d'enclenchement (13 ; 113 ; 213 ; 313 ; 413 ; 513 ; 613) sont disposés radialement à l'intérieur d'une zone annulaire dans laquelle sont prévues les cavités d'enclenchement (12 ; 112 ; 212 ; 312 ; 412 ; 612) qui sont ouvertes sensiblement radialement vers l'intérieur.

7. Ferrure articulée selon la revendication 5 ou 6, caractérisée en ce que les cavités d'enclenchement (12 ; 112 ; 212 ; 312 ; 412 ; 612) sont formées des vides compris entre les dents (10 ; 110 ; 211) d'une couronne dentée concentrique à l'axe d'articulation (3 ; 303) et les verrous (13 ; 113 ; 213 ; 313 ; 413 ; 513 ; 613) ont dans la région de leur partie d'extrémité libre (13' ; 113' ; 213' ; 413' ; 613') pouvant être introduite dans les vides un profil géométriquement analogue au profil des vides.

8. Ferrure articulée selon la revendication 7, caractérisée en ce que les cotes de la partie d'extrémité (13' ; 113' ; 213' ; 613') des verrous (13 ; 113 ; 213 ; 313 ; 413 ; 613) qui pénètre dans les cavités d'enclenchement (12 ; 112 ; 212 ; 312 ; 412 ; 612) sont au maximum aussi grandes dans la direction de pivotement que les cotes correspondantes des cavités d'enclenchement (12 ; 112 ; 212 ; 312 ; 412 ; 612).

9. Ferrure articulée selon l'une des revendications 5 à 8, caractérisée en ce que les verrous (13 ; 113 ; 613) sont disposés dans un espace annulaire (11) qui est délimité en direction axiale par les deux parties de la ferrure (1, 2 ; 101, 102 ; 601, 602).

10. Ferrure articulée selon l'une des revendications 1 à 9, caractérisée en ce que chaque élément d'enclenchement (13 ; 113 ; 213 ; 313 ; 513 ; 613) est soumis par un élément élastique sous précontrainte (14 ; 214 ; 514 ; 614) à une charge orientée vers les cavités d'enclenchement (12 ; 112 ; 212 ; 612).

11. Ferrure articulée selon la revendication 10, caractérisée en ce que tous les éléments élastiques (14) sont réalisés monobloc avec un disque de support (16) dont débordent les éléments élastiques (14) réalisés à la forme de languettes.

12. Ferrure articulée selon l'une des revendications 9 à 11, caractérisée en ce qu'un dispositif de manoeuvre (20) comprend un anneau (21) disposé concentriquement à l'axe d'articulation (3), rotatif dans la direction du pivotement et comportant pour chaque élément élastique (14) une surface de came (23) pouvant être mise en appui contre celui-ci et se déplacant dans le sens d'une élévation de la contrainte lors d'un mouvement de rotation dans la direction de pivotement.

13. Ferrure articulée selon l'une des revendications 1 à 12, caractérisée en ce qu'un élément (214 ; 316 ; 627) qui est présent pour limiter le mouvement radial des verrous (13 ; 113 ; 213 ; 313 ; 613) empêche à l'état de verrouillage que les verrous engagés sortent totalement des cavités correspondantes d'enclenchement et il maintient ainsi l'état de verrouillage par complémentarité de formes.

14. Ferrure articulée selon la revendication 13, caractérisée en ce que l'élément (316) est commandé de manière que même en cas de variations angulaires de la ferrure articulée à l'état de déverrouillage, au moins l'un des verrous (313) soit repoussé dans l'une des cavités d'enclenchement (312) sans toutefois qu'il entre en contact avec les flancs de ces cavités d'enclenchement.

15. Ferrure articulée selon l'une des revendications 1 à 14, caractérisée en ce qu'un appui à frottement qui est à l'extérieur de la plage d'auto-blocage est prévu entre les surfaces (422) des éléments d'enclenchement (13 ; 113 ; 213 ; 313 ; 413) qui sont en appui contre les cavités d'enclenchement (12 ; 112 ; 212 ; 312 ; 412) pour un verrouillage sans jeu de la ferrure sous charge d'utilisation et ces lieux de contact des cavités d'enclenchement (12 ; 112 ; 212 ; 312 ; 412).

16. Ferrure articulée selon la revendication 15, caractérisée par des moyens (316 ; 418 ; 423 ; 627) d'arrêt des éléments d'enclenchement (313 ; 413 ; 613) par complémentarité de formes à leur position de blocage.

17. Ferrure articulée selon la revendication 16, caractérisée en ce que les moyens n'arrêtent les éléments d'enclenchement (413) par complémentarité de formes à leur position de blocage qu'en présence de charges supérieures à la charge d'utilisation.

18. Ferrure articulée selon l'une des revendications 15 à 17, caractérisée par un ressort enroulé (215) qui comprend plus d'une spire complète et qui est en liaison avec tous les éléments d'enclenchement (213) déplaçables radialement par rapport à l'axe d'articulation.

19. Ferrure articulée selon la revendication 18, caractérisée en ce que le ressort enroulé consiste en au moins deux éléments de ressort enroulé comprenant des parties qui sont à chevauchement, chaque élément de ressort enroulé formant moins d'une spire complète.

20. Ferrure articulée selon la revendication 18 ou 19, caractérisée en ce que le ressort enroulé (215) est contractable en vue du mouvement simultané de tous les éléments d'enclenchement (213) qui les met à leur position de déverrouillage.

21. Ferrure articulée selon l'une des revendications 18 à 20, caractérisée en ce que le ressort enroulé (215) forme pour chacun des éléments d'enclenchement (213) un ressort qui tend à le repousser à la position de verrouillage et à le tenir à celle-ci.

22. Ferrure articulée selon l'une des revendications 18 à 21, caractérisée en ce que le ressort enroulé (215) peut être bloqué à l'état tenant les éléments d'enclenchement (213) en prise avec les cavités d'enclenchement (212).

23. Ferrure articulée selon l'une des revendications 15 à 22, caractérisée en ce que les moyens arrêtant les éléments d'enclenchement à leur position de blocage par complémentarité de formes sont formés de surfaces (418, 423) des éléments d'enclenchement (413) et des cavités d'enclenchement (412) qui coopèrent les unes avec les autres.

24. Ferrure articulée selon l'une des revendications 16 à 22, caractérisée en ce que les moyens arrêtant les éléments d'enclenchement à leur position de blocage par complémentarité de formes sont constitués d'un disque de blocage (316 ; 627) qui arrête par complémentarité de formes les éléments d'enclenchement (313) se trouvant en position de blocage en les empêchant de se déplacer vers la position de déverrouillage.

25. Ferrure articulée selon la revendication 24, caractérisée en ce que le disque de blocage (316) comprend le long de sa circonférence un nombre de segments (330) qui correspond au nombre des éléments d'enclenchement (313) et, entre ces segments, dans chaque cas, un segment intermédiaire (331) et en ce que la ligne extérieure de bordure des segments (330) est située sur un cercle ayant un diamètre supérieur à celui de la ligne extérieure de bordure des segments intermédiaires (331).

26. Ferrure articulée selon la revendication 23, caractérisée en ce que, en cas de réalisation des cavités d'enclenchement (412) sous forme d'entre-dents et des éléments d'enclenchement (413) en dents ayant une partie d'extrémité (413') conformée de manière correspondante à celle des cavités d'enclenchement (412'), cette partie d'extrémité comprend en plus d'une zone (422) de largeur croissante qui débute à la tète de la dent, une zone (423) de largeur au moins sensiblement constante et en ce que les entre-dents (412) sont délimités par deux paires de surfaces correspondantes (417, 418), de sorte que, lorsqu'une dent (413) est en prise incomplète avec l'entredents associé (412), il n'existe qu'un appui à frottement sans auto-blocage et ce n'est qu'en présence d'une prise au moins approximativement complète qu'il existe une complémentarité de formes.

27. Ferrure articulée selon l'une des revendications 10 à 26, caractérisée en ce que, lorsque les éléments d'enclenchement sont réalisés sous la forme de verrous déplaçables radialement (513 ; 613), dont chacun est soumis à la force d'un ressort sous précontrainte (514 ; 614) orientée vers la position de blocage, chaque verrou (413) comporte un mentonnet (513''; 613'') qui exerce sur le ressort (514 ; 614) une charge orientée vers une came de commande (525 ; 625) disposée perpendiculairement à la direction de déplacement du verrou (514 ; 614) et qui est mobile dans cette direction.

28. Ferrure articulée selon la revendication 27, caractérisée en ce que chaque came de commande (625) est prévue sur un disque de commande (628) disposé rotatif concentriquement à l'axe d'articulation.

29. Ferrure articulée selon la revendication 28, caractérisée en ce que chaque came de commande (625) est formée par le bord d'une échancrure (629) du disque de commande (628) dans laquelle pénètre le mentonnet (613'') débordant du verrou (614) en direction axiale.

30. Ferrure articulée selon l'une des revendications 24 ou 27 à 29, caractérisée en ce le disque de blocage (627) en matière de ressort comporte un nombre de languettes (627') qui correspond au nombre des verrous (613) et dont l'une est orientée sur chaque verrou (613) et comporte un trou (630) d'entrée en prise du mentonnet (613'') du verrou associé (613).

31. Ferrure articulée selon la revendication 30, caractérisée en ce que la forme des trous (630) du disque de blocage (627) est adoptée de manière que seuls les mentonnets (613'') des verrous (613) se trouvant à leur position de blocage soit arrêtés par complémentarité de formes par le bord du trou associé (630).

32. Ferrure articulée selon la revendication 30, caractérisée en ce qu'un corps de commande (632) qui est prévu sur le disque de commande (628) pour chacune des languettes (627') fait fléchir la languette associée (627') pour la mettre à une position de libération qui libère le mentonnet (613'') et à laquelle la languette (627') est sous contrainte lors d'un mouvement de rotation du disque de commande (628) dans le sens d'un déplacement de tous les verrous (613) les mettant en position de déverrouillage.

33. Ferrure articulée selon la revendication 32, caractérisée en ce que le disque de blocage (627) est disposé à côté de l'une des surfaces frontales du disque de commande (628) et le verrou (613) est disposé à côté de l'autre de ces surfaces, en ce que les languettes (627') faisant ressort axialement sont orientées radialement et en ce que les languettes (627') sont déplaçables dans la zone de leur trou (630) pour être écartées du disque de commande (628) au moyen des corps de commande qui sont conformés en mentonnets (632) placés sur la surface frontale du disque de commande (628) qui est tournée vers le disque de blocage (627).
